(19) Europäisches Patentamt
European Patent Office
Office européen des brevets

(11) EP 3 181 227 A1

(12) EUROPEAN PATENT APPLICATION
published in accordance with Art. 153(4) EPC

(43) Date of publication:
21.06.2017 Bulletin 2017/25

(21) Application number: 15832204.0

(22) Date of filing: 14.07.2015

(51) Int Cl.:
*B01J 41/14* (2006.01) *B01D 61/46* (2006.01)
*B01D 69/02* (2006.01) *B01D 69/10* (2006.01)
*B01D 69/12* (2006.01) *B01J 47/12* (2017.01)
*C08J 5/22* (2006.01)

(86) International application number:
PCT/JP2015/070156

(87) International publication number:
WO 2016/024453 (18.02.2016 Gazette 2016/07)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 14.08.2014 JP 2014165208

(71) Applicant: Fujifilm Corporation
Minato-ku
Tokyo 106-8620 (JP)

(72) Inventors:
- INOUE Kazuomi
Kanagawa 258-8577 (JP)
- HARADA Motoi
Kanagawa 258-8577 (JP)

(74) Representative: Hoffmann Eitle
Patent- und Rechtsanwälte PartmbB
Arabellastraße 30
81925 München (DE)

# (54) POLYMERIC FUNCTIONAL MEMBRANE FOR REMOVING NITRATE IONS, PRODUCTION METHOD THEREFOR, SEPARATION MEMBRANE MODULE, AND ION EXCHANGE DEVICE

(57) A functional polymer membrane for removing nitrate ions contains an ion exchange polymer containing a constitutional unit represented by Formula CL as Constitutional unit A, and has an ion exchange capacity represented by Equation a of 2.5 meq/g or more and 6.0 meq/g or less, and a crosslinking group density of represented by Formula b of 0.9 mmol/g or more and 2.0 mmol/g or less.

Equation a: Ion exchange capacity = (amount of ionic groups in membrane meq)/(dry weight of membrane)

Equation b: Crosslinking group density = (amount of Component A in membrane mmol)/(dry weight of membrane)

EP 3 181 227 A1

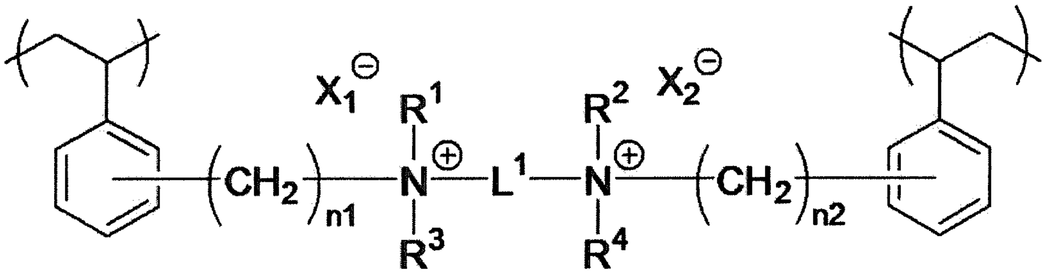

(CL)

## Description

## BACKGROUND OF THE INVENTION

1. Field of the Invention

The present invention relates to a functional polymer membrane for removing nitrate ions, a method of producing the same, a separation membrane module, and an ion exchange device.

2. Description of the Related Art

As a functional polymer membrane, an ion exchange membrane, a reverse osmosis membrane, a forward osmosis membrane, a gas separation membrane and the like are known as membranes having various kinds of functions.

For example, the ion exchange membrane is used in electrodeionization (EDI), continuous electrodeionization (CEDI), electrodialysis (ED), electrodialysis reversal (EDR) and the like.

The electrodeionization (EDI) is a water treatment process in which ions are removed from aqueous liquids using an ion exchange membrane and an electrical potential to achieve ion transport. The electrodeionization differs from other water purification technologies, such as conventional ion exchange, in that it does not require the use of chemicals such as acids or caustic soda. The electrodeionization can be used to produce ultra pure water. The electrodialysis (ED) and the electrodialysis reversal (EDR) are electrochemical separation processes that remove ions and the like from water and other fluids.

In recent years, an increase in nitrate ion concentration in groundwater has been a problem on a global scale, and a nitrate ion removal method by electrodialysis using an ion exchange membrane has attracted attention. It is known that in electrodialysis, precipitation (scaling) of hardly soluble salts resulting from divalent sulfate ions or the like in driving for a long period of time occurs and the efficiency is declined. Generally, an ion exchange membrane has the property of allowing only cations or anions to selectively permeating the ion exchange membrane. However, in addition to the selectivity, it is important to effectively remove nitrate ions by, while eliminating divalent anions such as nitrate ions, which may cause scaling, allowing only monovalent nitrate ions to selectively permeate the ion exchange membrane. Therefore, a technology that allows selective permeation of only monovalent ions has been actively developed (for example, refer to JP1995-265863A (JP-H07-265863A), and JP2001-49009A).

As a method for selective permeation of only monovalent ions, a multi-layered ion exchange membrane having a layer having a charge opposite to the charge of ions of a functional group of an ion exchange membrane on one surface of the ion exchange membrane (for example, refer to JP2001-49009A) is known.

## SUMMARY OF THE INVENTION

An object of the present invention is to provide a functional polymer membrane for removing nitrate ions exhibiting excellent electrodialysis test results, a method of producing the same, and a separation membrane module and an ion exchange device using a functional polymer membrane for removing nitrate ions.

That is, the above-described problems of the present invention were solved by the following means <1> to <20> including preferable embodiments.

<1> A functional polymer membrane for removing nitrate ions comprising: an ion exchange polymer containing a constitutional unit represented by Formula CL as Constitutional unit A, in which an ion exchange capacity represented by Equation a is 2.5 meq/g or more and 6.0 meq/g or less, a crosslinking group density represented by Equation b is 0.9 mmol/g or more and 2.0 mmol/g or less,

Equation a: Ion exchange capacity = (amount of ionic groups in membrane meq)/(dry weight of membrane)

Equation b: Crosslinking group density = (amount of Component A in membrane mmol)/(dry weight of membrane)

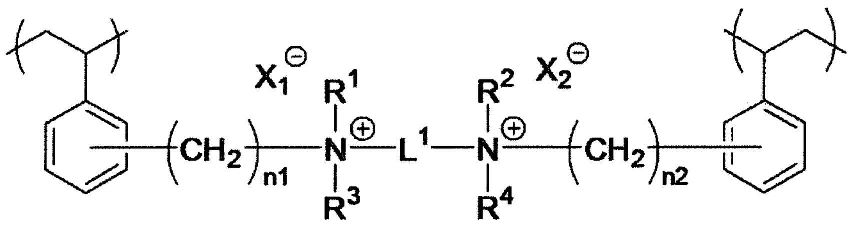

(CL)

in Formula CL, $L^1$ represents an alkylene group or an alkenylene group, $R^1$, $R^2$, $R^3$ and $R^4$ each independently represent an alkyl group or an aryl group, $R^1$ and $R^2$, and/or $R^3$ and $R^4$ may be bonded to each other to form a ring, n1 and n2 each independently represent an integer of 1 to 10, and $X_1^-$ and $X_2^-$ each independently represent an organic or inorganic anion.

<2> The functional polymer membrane for removing nitrate ions according to <1>, in which the ion exchange polymer further contains a constitutional unit represented by Formula SM or Formula MA as Constitutional unit C,

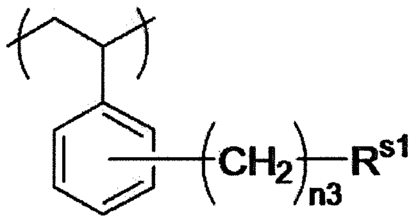

(SM)

in Formula SM, $R^{s1}$ represents $-N^+(R^{s2})(R^{s3})(R^{s4})(X_3^-)$, n3 represents an integer of 1 to 10, $R^{s2}$ to $R^{s4}$ each independently represent an alkyl group or an aryl group, $R^{s2}$ and $R^{s3}$, or $R^{s2}$, $R^{s3}$ and $R^{s4}$ may be bonded to each other to form an aliphatic hetero ring, and $X_3^-$ represents an organic or inorganic anion,

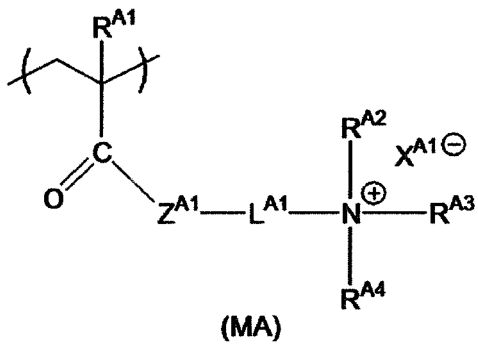

(MA)

in Formula MA, $R^{A1}$ represents a hydrogen atom or an alkyl group, $R^{A2}$ to $R^{A4}$ each independently represent an alkyl group or an aryl group, two or more of $R^{A2}$ to $R^{A4}$ may be bonded to each other to form a ring, $Z^{A1}$ represents -O- or -N(Ra)-, Ra represents a hydrogen atom or an alkyl group, $L^{A1}$ represents an alkylene group, and $X^{A1}$ represents a halogen ion, an aliphatic carboxylate ion, an aromatic carboxylate ion, an aliphatic sulfonate ion, or an aromatic sulfonate ion.

<3> The functional polymer membrane for removing nitrate ions according to <1> or <2>, in which the ion exchange polymer is obtained by polymerizing a composition that contains a compound represented by Formula CL2 as Component A, and a photopolymerization initiator represented by Formula PI as Component B,

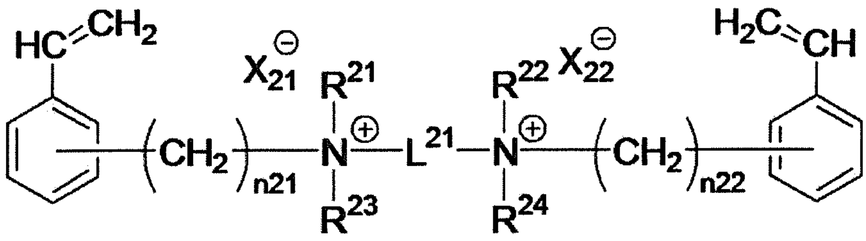

(CL2)

in Formula CL2, $L^{21}$ represents an alkylene group or an alkenylene group, $R^{21}$, $R^{22}$, $R^{23}$ and $R^{24}$ each independently represent an alkyl group or an aryl group, $R^{21}$ and $R^{22}$, and/or $R^{23}$ and $R^{24}$ may be bonded to each other to form a ring, n21 and n22 each independently represent an integer of 1 to 10, and $X_{21}^-$ and $X_{22}^-$ each independently represent an organic or inorganic anion,

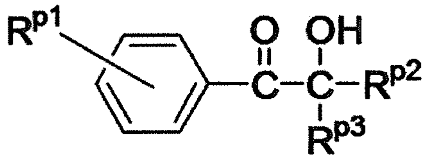

(PI)

in Formula PI, $R^{p1}$ represents a hydrogen atom, an alkyl group, an alkenyl group, alkoxy group or an aryloxy group, $R^{p2}$ and $R^{p3}$ each independently represent a hydrogen atom, an alkyl group, an alkenyl group, an alkoxy group or an aryloxy group, and $R^{p2}$ and $R^{p3}$ may be bonded to each other to form a ring.

<4> The functional polymer membrane for removing nitrate ions according to <3>, in which a content of Component A is 55% to 99% by mass with respect to a total solid content of the composition.

<5> The functional polymer membrane for removing nitrate ions according to <3> or <4>, in which a content of Component B is 0.1% to 10% by mass with respect to a total solid content of the composition.

<6> The functional polymer membrane for removing nitrate ions according to any one of <3> to <5>, in which the composition further includes a compound represented by Formula SM2 or a compound represented by Formula MA2 as Component C, and a molar ratio between Component A and Component C in the composition is Component A: Component C = 60:40 to 100:0,

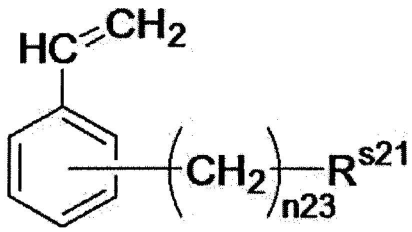

(SM2)

in Formula SM2, $R^{s21}$ represents $-N^+(R^{s22})(R^{s23})(R^{s24})(X_{23}^-)$, n23 represents an integer of 1 to 10, $R^{s22}$ to $R^{s24}$ each independently represent an alkyl group or an aryl group, $R^{s22}$ and $R^{s23}$, or $R^{s22}$, $R^{s23}$ and $R^{s24}$ may be bonded to each other to form an aliphatic hetero ring, and $X_{23}^-$ represents an organic or inorganic anion,

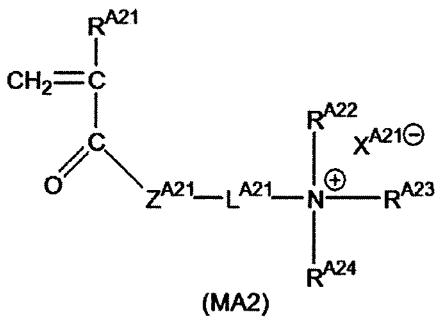

(MA2)

in Formula MA2, $R^{A21}$ represents a hydrogen atom or an alkyl group, $R^{A22}$ to $R^{A24}$ each independently represent an alkyl group or an aryl group, two or more of $R^{A22}$ to $R^{A4}$ may be bonded to each other to form a ring, $Z^{A21}$ represents -O- or -N(Ra)-, Ra represents a hydrogen atom or an alkyl group, $L^{A21}$ represents an alkylene group, and $X^{A21}$ represents a halogen ion, an aliphatic carboxylate ion, an aromatic carboxylate ion, an aliphatic sulfonate ion, or an aromatic sulfonate ion.

<7> The functional polymer membrane for removing nitrate ions according to any one of <3> to <6>, in which the composition further includes a solvent as Component D.

<8> The functional polymer membrane for removing nitrate ions according to <7>, in which the composition includes water or a water-soluble solvent as Component D.

<9> The functional polymer membrane for removing nitrate ions according to any one of <1> to <8>, further comprising: a support.

<10> The functional polymer membrane for removing nitrate ions according to <9>, in which the support is a porous support.

<11> The functional polymer membrane for removing nitrate ions according to any one of <1> to <10>, in which the ion exchange polymer is obtained from the composition that contains a compound represented by Formula CL2 as Component A, and a molecular weight of Component A is 300 or more and 600 or less,

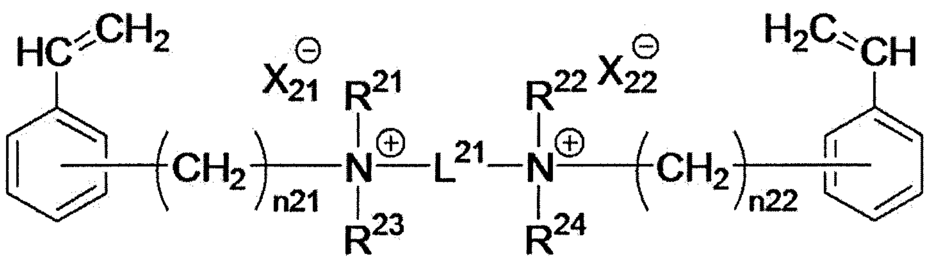

(CL2)

in Formula CL2, $L^{21}$ represents an alkylene group or an alkenylene group, $R^{21}$, $R^{22}$, $R^{23}$ and $R^{24}$ each independently represent an alkyl group or an aryl group, $R^{21}$ and $R^{22}$, and/or $R^{23}$ and $R^{24}$ may be bonded to each other to form a ring, n21 and n22 each independently represent an integer of 1 to 10, and $X_{21}^-$ and $X_{22}^-$ each independently represent an organic or inorganic anion.

<12> A method of producing a functional polymer membrane for removing nitrate ions comprising: polymerizing a composition that contains a compound represented by Formula CL2 as Component A to cure the composition, in which the functional polymer membrane has an ion exchange capacity represented by Equation a of 2.5 meq/g or more and 6.0 meq/g or less, and a crosslinking group density represented by Equation b of 0.9 mmol/g or more and 2.0 mmol/g,

Equation a: Ion exchange capacity = (amount of ionic groups in membrane meq)/(dry weight of membrane)

Equation b: Crosslinking group density = (amount of Component A in membrane mmol)/(dry weight of membrane)

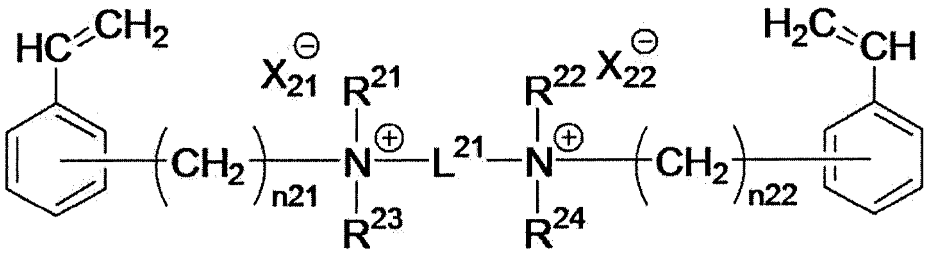

(CL2)

in Formula CL2, $L^{21}$ represents an alkylene group or an alkenylene group, $R^{21}$, $R^{22}$, $R^{23}$ and $R^{24}$ each independently represent an alkyl group or an aryl group, $R^{21}$ and $R^{22}$, and/or $R^{23}$ and $R^{24}$ may be bonded to each other to form a ring, n21 and n22 each independently represent an integer of 1 to 10, and $X_{21}^-$ and $X_{22}^-$ each independently represent an organic or inorganic anion.

<13> The method of producing a functional polymer membrane for removing nitrate ions according to <12>, in which the composition further includes a photopolymerization initiator represented by Formula PI as Component B,

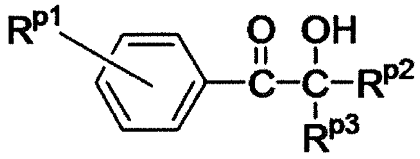

(PI)

in Formula PI, $R^{p1}$ represents a hydrogen atom, an alkyl group, an alkenyl group, an alkoxy group or an aryloxy group, $R^{p2}$ and $R^{p3}$ each independently represent a hydrogen atom, an alkyl group, an alkenyl group, an alkoxy group or an aryloxy group, and $R^{p2}$ and $R^{p3}$ may be bonded to each other to form a ring.

<14> The method of producing a functional polymer membrane for removing nitrate ions according to <12> or <13>, in which the composition further includes a compound represented by Formula SM2 or a compound represented by Formula MA2 as Component C,

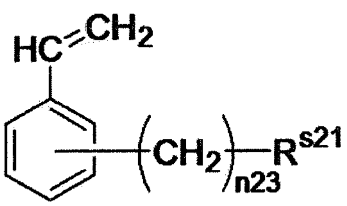

(SM2)

in Formula SM2, $R^{s21}$ represents $-N^+(R^{s22})(R^{s23})(R^{s24})(X_{23}^-)$, n23 represents an integer of 1 to 10, $R^{s22}$ to $R^{s24}$ each independently represent an alkyl group or an aryl group, $R^{s22}$ and $R^{s23}$, or $R^{s22}$, $R^{s23}$ and $R^{s24}$ may be bonded to each other to form an aliphatic hetero ring, and $X_{23}^-$ represents an organic or inorganic anion,

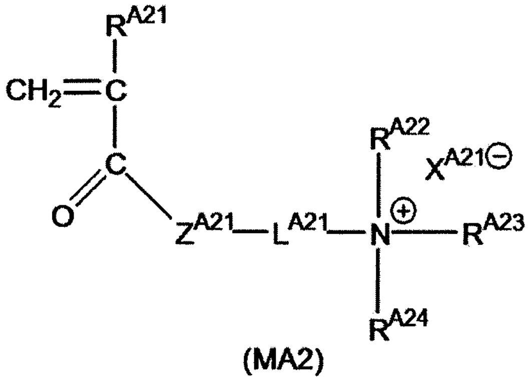

(MA2)

in Formula MA2, $R^{A21}$ represents a hydrogen atom or an alkyl group, $R^{A22}$ to $R^{A24}$ each independently represent an alkyl group or an aryl group, two or more of $R^{A22}$ to $R^{A4}$ may be bonded to each other to form a ring, $Z^{A21}$ represents -O- or -N(Ra)-, Ra represents a hydrogen atom or an alkyl group, $L^{A21}$ represents an alkylene group, and $X^{A21}$ represents a halogen ion, an aliphatic carboxylate ion, an aromatic carboxylate ion, an aliphatic sulfonate ion, or an aromatic sulfonate ion.

<15> The method of producing a functional polymer membrane for removing nitrate ions according to any one of <12> to <14>, in which the composition further includes water as Component D.

<16> The method of producing a functional polymer membrane for removing nitrate ions according to any one of <12> to <15>, in which the composition further includes a polymerization inhibitor as Component E.

<17> The method of producing a functional polymer membrane for removing nitrate ions according to any one of <12> to <16>, further comprising: an application process of applying the composition to a porous support and/or impregnating a porous support with the composition.

<18> The method of producing a functional polymer membrane for removing nitrate ions according to any one of <12> to <17>, in which the polymerizing is a process irradiating the composition with energy rays.

<19> A separation membrane module comprising: the functional polymer membrane for removing nitrate ions according to any one of <1> to <11>.

<20> An ion exchange device comprising: the functional polymer membrane for removing nitrate ions according to any one of <1> to <11>.

According to the present invention, it is possible to provide a functional polymer membrane for removing nitrate ions exhibiting excellent electrodialysis test results, and a method of producing the same.

## DESCRIPTION OF THE PREFERRED EMBODIMENTS

Hereinafter, the contents of the present invention will be described in detail. The following description of the constitutional requirements is made on the basis of representative embodiments of the present invention, but it should not be construed that the present invention is limited to those embodiments. The numerical range which is shown by "to" used in the present specification means the range including the numerical values described before and after "to" as the lower limit and the upper limit, respectively.

With respect to the expression of group (atomic group) in the present specification, the expression even when there is no mention of "substituted" or "unsubstituted" includes groups not only having no substituent but also having substituents. For example, "alkyl group" includes not only an alkyl group not having a substituent (unsubstituted alkyl group) but also an alkyl group having a substituent (substituted alkyl group).

Further, in a geometric isomer being a substitution pattern around a double bond in each formula, for convenience of a display, even if one of the isomers is described, unless otherwise noted, the isomer may be an E isomer, a Z isomer or a mixture of these isomers.

In addition, a chemical structural formula in the present specification may be given using a simplified structural formula in which hydrogen atoms are omitted.

In the present specification, "(meth)acrylate" denotes acrylate and methacrylate, "(meth)acrylic" denotes acrylic and methacrylic, "(meth)acryloyl" denotes acryloyl and methacryloyl, and "(meth)acrylamides" denotes acrylamide or methacrylamide.

In the present invention, "% by mass" and "% by weight" have the same meaning, and "parts by mass" and "parts by weight" have the same meaning.

In addition, in the present invention, a combination of two or more preferable embodiments is a more preferable

embodiment.

(Functional Polymer Membrane for Removing Nitrate Ions)

A functional polymer membrane for removing nitrate ions of the present invention (hereinafter, also simply referred to as "membrane" or "functional polymer membrane") contains an ion exchange polymer containing a constitutional unit represented by Formula CL as Constitutional unit A, an ion exchange capacity represented by Equation a is 2.5 meq/g or more and 6.0 meq/g or less, and a crosslinking group density represented by Equation b is 0.9 mmol/g or more and 2.0 mmol/g or less.

Equation a: Ion exchange capacity = (amount of ionic groups in membrane meq)/(dry weight of membrane)

Equation b: Crosslinking group density = (amount of Component A in membrane mmol)/(dry weight of membrane)

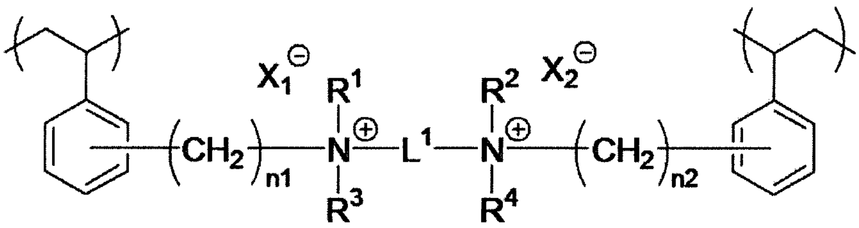

**(CL)**

In Formula CL, $L^1$ represents an alkylene group or an alkenylene group, $R^1$, $R^2$, $R^3$ and $R^4$ each independently represent an alkyl group or an aryl group, $R^1$ and $R^2$, and/or $R^3$ and $R^4$ may be bonded to each other to form a ring, n1 and n2 each independently represent an integer of 1 to 10, and $X_1^-$ and $X_2^-$ each independently represent an organic or inorganic anion.

As a result of intensive investigations conducted by the present inventors, it has been found that a functional polymer membrane for removing nitrate ions that contains an ion exchange polymer containing Constitutional unit A and has an ion exchange capacity and a crosslinking group density within specific ranges has excellent scaling resistance and excellent selective permeability of monovalent anions.

In addition, the composite ion exchange membrane described in JP2001-49009A is produced by preparing an ion exchange membrane by kneading a commercially available polystyrene-based strong basic anion exchange resin or polystyrene-based strong acidic cation exchange resin with a binder resin, melting pressing the kneaded material with a plate press by heating, and applying a polymer having an opposite charge to the membrane.

Since a resin layer and an auxiliary layer adhere to each other only by hydrophobic interaction in the composite ion exchange membrane described in JP2001-49009A, peeling easily occurs, rubbing occurs when handling the membrane or the auxiliary layer may be lost in long-term use, thereby causing deterioration in performance. Further, it is required to provide two step processes of an ion exchange membrane production process and an auxiliary layer application process to produce the composite ion exchange membrane, which causes an increase in cost.

In contrast, since an auxiliary layer is not used in the functional polymer membrane in the present invention, deterioration in performance does not occur in long-term use and the membrane can be produced in one step process, which is excellent in cost reduction.

Hereinafter, the properties of the functional polymer membrane of the present invention, and each component constituting the functional polymer membrane of the present invention will be described.

<Properties of Functional Polymer Membrane>

The functional polymer membrane of the present invention is an anion exchange membrane having monovalent ion permselectivity.

In the case in which the membrane has a support, the thickness of the membrane of the present invention is preferably 30 to 500 $\mu$m, more preferably 50 to 300 $\mu$m, and particularly preferably 50 to 250 $\mu$m including the support.

[Ion Exchange Capacity]

The ion exchange capacity of the functional polymer membrane of the present invention represented by Equation a is 2.5 meq/g or more and 6.0 meq/g or less.

Equation a: Ion exchange capacity = (amount of ionic groups in membrane meq)/(dry weight of membrane)

Here, in the case in which the membrane has a support, the dry weight of the membrane includes the weight of the support.
The ion exchange capacity of the functional polymer membrane of the present invention is preferably 2.7 meq/g to 6.0 meq/g or more and more preferably 3.0 meq/g to 6.0 meq/g.
Although the upper limit of the ion exchange capacity is not particularly limited, the upper limit is substantially 6.0 meq/g or less. Here, the term "meq" stands for milliequivalent.
The ion exchange capacity and the electrical resistance can be measured by the methods described in Membrane Science, 319, pp. 217 to 218 (2008), and Experimental method in membrane science, pp. 193-195 (1984), authored by Masayuki Nakagaki.
Particularly, the ion exchange capacity is measured by the following procedures.

1) A sample membrane which has been cut into a size of 5 cm × 5 cm is immersed in a 2 M aqueous $NaNO_3$ solution for 30 minutes and then washed in 500 mL of pure water.
2) The sample membrane is put into 100 mL of a 2 M aqueous NaCl solution. While replacing the 2 M aqueous NaCl solution hourly, the sample membrane is immersed in the solution for 6 hours or longer.
3) The sample membrane is sufficiently washed in 500 mL of pure water while replacing the pure water. It is confirmed that no cloudiness occurs by adding a drop of a 1 M aqueous $AgNO_3$ solution to the cleaning liquid. In the case of cloudiness occurring, cleaning is not sufficient and thus the sample membrane is repeatedly cleaned with pure water.
4) The washed sample membrane is immersed in 30 mL of a 2 M aqueous $NaNO_3$ solution, the solution is hourly replaced two times (each 30 mL), and finally the membrane is immersed in the solution for 6 hours or longer.
5) The membrane is taken out and immersed in 30 mL of pure water. The solution is hourly replaced two times (each 30 mL), and finally the membrane is immersed in the solution for 6 hours or longer. It is confirmed that no cloudiness occurs by adding a drop of a 1 M aqueous $AgNO_3$ solution to the final immersion liquid. In the case of cloudiness occurring, cleaning is not sufficient and thus the sample membrane is repeatedly cleaned with pure water.
6) The replaced liquid, the immersion liquid, and the cleaning liquid are mixed and 0.3 g of an aqueous solution of 1/60 mol/L of potassium chromate is further added thereto. Titration with the 0.1 M aqueous $AgNO_3$ solution is conducted such that the time when a reddish brown precipitate is formed is set as an end point. From the titration amount, the amount of ionic groups c (meq) included in the membrane is calculated.
7) The membrane used in the titration is dried in a vacuum oven at 60°C for 12 hours, and then the weight is measured to obtain the dry weight. Further, the ion exchange capacity is calculated from the above value and the value of c using Equation a: Ion exchange capacity = (amount of ionic groups in membrane meq)/(dry weight of membrane).

[Crosslinking Group Density]

The crosslinking group density of the functional polymer membrane of the present invention represented by Equation b is 0.9 mmol/g or more and 2.0 mmol/g or less.

Equation b: Crosslinking group density = (amount of Component A in membrane mmol)/(dry weight of membrane)

Here, in the case in which the membrane has a support, the dry weight of the membrane includes the weight of the support.

The crosslinking group density of the functional polymer membrane of the present invention is preferably 1.15 to 2.0 mmol/g, more preferably 1.35 to 2.0 mmol/g, and still more preferably 1.45 to 2.0 mmol/g.

The crosslinking group density is calculated by the following procedures.

In the case in which $R^1$ and $R^2$, and/or $R^3$ and $R^4$ in the constitutional unit represented by Formula CL are bonded to each other to form a ring, a specific absorption peak derived from a piperazine ring-like structure is obtained in the vicinity of 920 $cm^{-1}$ in the infrared microspectrometry of the membrane. The monomer unit ratio in the membrane can be calculated from this peak intensity and the peak intensities of an aromatic ring (1,605 $cm^{-1}$) or amide (1,650 $cm^{-1}$), and ester (1,750 $cm^{-1}$).

In other cases, the crosslinking group density is calculated by dynamic viscoelasticity measurement. A standard sample in which the crosslinking group density is changed is prepared, and the storage elastic modulus E' thereof is measured at 25°C to create a calibration curve. The crosslinking group density is calculated from the storage elastic modulus and the calibration curve of the target sample.

The standard samples are membranes having crosslinking group densities of 0.3, 0.5, 0.7, 1.0, and 1.4 mmol/g prepared by the methods described in Examples using SM-1 and CL-8 and the storage elastic modulus E' of each sample is measured by carrying out dynamic viscoelasticity measurement at 25°C. The storage elastic modulus E' is determined by measurement under the conditions that the membrane is cut into a size of vertical 10 mm x horizontal 5 mm and the measurement is carried out in a tension mode at a frequency of 10 Hz and a temperature of 25°C in a nitrogen atmosphere. As the measurement device, Rheogel-E1500 (manufactured by UBM Ltd.) is used. A graph in which the crosslinking group density is plotted as the horizontal axis and the storage elastic modulus is plotted as the vertical axis is formed and an approximate curve is obtained using a least square method. The crosslinking group density is calculated using the approximate curve from the storage elastic modulus of the target sample.

Hereinafter, each component constituting the functional polymer membrane of the present invention will be described.

In addition, a substituent in each constitutional unit and each component used in the present invention can be used without deteriorating the function of the functional polymer membrane as long as the substituent is electrically neutral and is an inert group.

<Ion Exchange Polymer>

Constitutional Unit A: Constitutional Unit Represented by Formula CL

The functional polymer membrane of the present invention contains an ion exchange polymer containing a constitutional unit represented by Formula CL as Constitutional unit A.

In Formula CL, $L^1$ represents an alkylene group or an alkenylene group and is preferably an alkylene group.

The alkylene group and the alkenylene group may be branched or may have a ring structure.

The alkylene group in $L^1$ preferably has 2 to 10 carbon atoms and more preferably has 2 or 3 carbon atoms, and examples thereof include an ethylene group and a propylene group.

The alkenylene group in $L^1$ preferably has 2 to 10 carbon atoms and more preferably has 2 or 3 carbon atoms, and an ethenylene group is still more preferable.

$R^1$, $R^2$, $R^3$ and $R^4$ each independently represent an alkyl group or an aryl group and an alkyl group is preferable. $R^1$ and $R^{b2}$, and/or $R^3$ and $R^4$ may be bonded to each other to form a ring. Among these, it is more preferable that $R^1$ and $R^2$ are bonded to each other to form a ring or it is more preferable that $R^3$ and $R^4$ are bonded to each other to form a ring, and it is particularly preferable that $R^a$ and $R^b$, and $R^3$ and $R^4$ are bonded to each other to form a ring.

In the case in which $R^1$ and $R^2$, and/or $R^3$ and $R^4$ are bonded to each other to form a ring, a group formed by bonding $R^1$ and $R^2$, and/or $R^3$ and $R^4$ to each other is preferably an alkylene group, more preferably an alkylene group having 2 to 4 carbon atoms, and still more preferably a 1,2-ethylene group.

It is preferable that $R^1$ and $R^2$ are bonded to each other to form a piperazine ring or a dihydropyrazine ring with $L^1$, and it is more preferable that in addition to $R^1$ and $R^2$, $R^3$ and $R^4$ are further bonded to each other to form a triethylenediamine ring (1,4-diazabicyclo[2.2.2]octane ring) with $L^1$. Further, the formed ring may have a substituent. The substituent is preferably an alkyl group.

The number of carbon atoms in $R^1$, $R^2$, $R^3$ and $R^4$ is each independently preferably 1 to 20, more preferably 1 to 10, and still more preferably 1 to 4.

In the case in which $R^1$, $R^2$, $R^3$ and $R^4$ are not bonded to each other to form a ring, as the alkyl group, an alkyl group having 1 to 8 carbon atoms is preferable, an alkyl group having 1 to 4 carbon atoms is more preferable, and an alkyl group having 1 or 2 carbon atoms is still more preferable. Examples of the alkyl group include methyl, ethyl, isopropyl, n-butyl, and 2-ethylhexyl.

In addition, as the aryl group, an aryl group having 6 to 10 carbon atoms is preferable and a phenyl group is more preferable.

The alkyl group may be branched or may have a ring structure.

n1 and n2 each independently represent an integer of 1 to 10, and an integer of 1 to 4 is preferable, 1 or 2 is more preferable, and 1 is still more preferable.

In addition, from the viewpoint of synthesis, n1 and n2 are preferably the same.

$X_1^-$ and $X_2^-$ each independently represent an organic or inorganic anion and an inorganic anion is preferable. The organic or inorganic anion may be a monovalent anion or a divalent or higher anion. In the case of a divalent or higher anion, the divalent or higher anion is present in an amount electrically equivalent to a cation such as an ammonium group or the like in Formula CL. For example, $X_1^-$ and $X_2^-$ in Formula CL may represent one divalent anion or two or more divalent or higher anions may be present as $X_1^-$ and/or $X_2^-$ of the constitutional unit represented by Formula CL.

Examples of the organic anion include an alkyl sulfonate anion, an aryl sulfonate anion, and an alkyl or aryl carboxylate anion, and examples thereof include a methane sulfonate anion, a benzene sulfonate anion, a toluene sulfonate anion, and an acetate anion.

Examples of the inorganic anion include a halogen anion, a sulfate dianion, and a phosphate anion, and a halogen anion is preferable. Among halogen anions, a chlorine anion and a bromine anion are preferable, and a chlorine anion is particularly preferable.

Constitutional unit A is preferably a constitutional unit derived from the following compounds CL-1 to CL-12, but the present invention is not limited thereto.

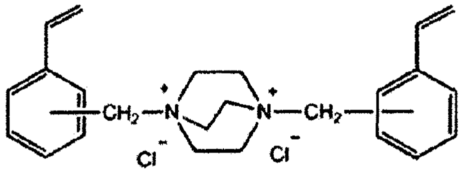

(CL-1)

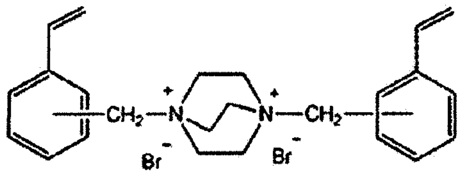

(CL-2)

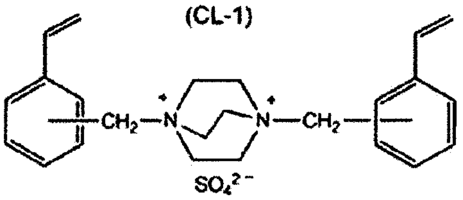

(CL-3)

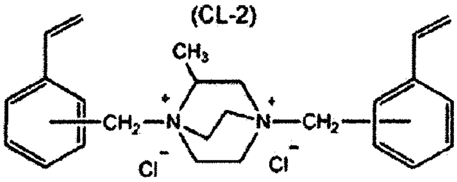

(CL-4)

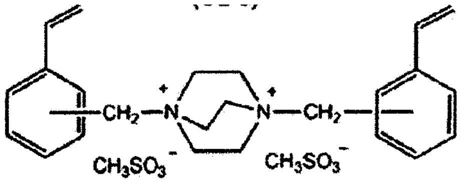

(CL-5)

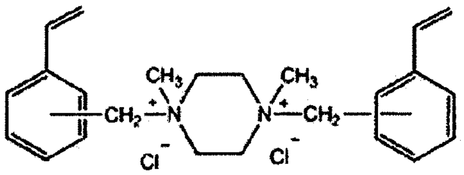

(CL-6)

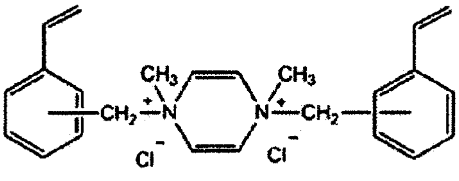

(CL-7)

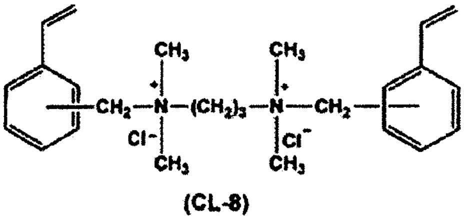

(CL-8)

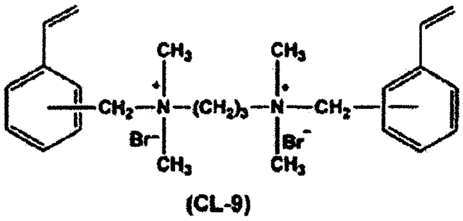

(CL-9)

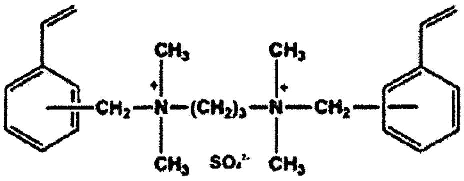

(CL-10)

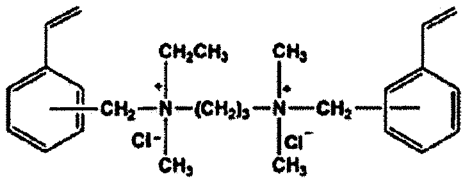

(CL-11)

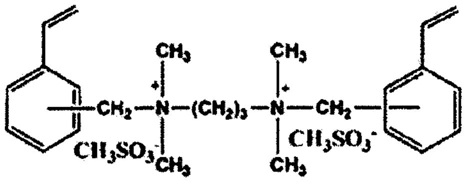

(CL-12)

Constitutional unit A is preferably a constitutional unit derived from a compound having a molecular weight of preferably 300 to 600, more preferably 300 to 500, most preferably 300 to 450. That is, the molecular weight of Component A is preferably 300 or more and 600 or less.

[Content of Constitutional Unit A]

The ion exchange polymer in the present invention may contain one Constitutional unit A alone or two or more Constitutional units A.

The content of Constitutional unit A is preferably 55% to 99% by mass, more preferably 70% to 99% by mass, still more preferably 75% to 99% by mass, particularly preferably 85% to 99% by mass, and most preferably 90% to 99% by mass with respect to the total mass of the ion exchange polymer.

When the content of Constitutional unit A is within the above range, the physical strength of a membrane to be formed is excellent and the performance of the membrane is more excellent.

Constitutional Unit C: Constitutional Unit Represented by Formula SM or Constitutional Unit Represented by Formula MA

It is preferable that the ion exchange polymer in the present invention further contains a constitutional unit represented by Formula SM or a constitutional unit represented by Formula MA as Constitutional unit C.

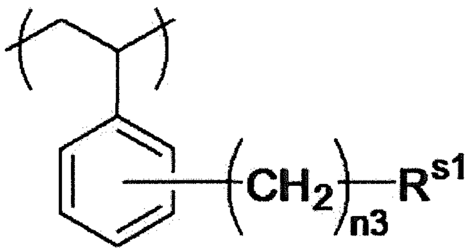

(SM)

In Formula SM, $R^{s1}$ represents $-N^+(R^{s2})(R^{s3})(R^{s4})(X_3^-)$, n3 represents an integer of 1 to 10, $R^{s2}$ to $R^{s4}$ each independently represent an alkyl group or an aryl group, $R^{s2}$ and $R^{s3}$, or $R^{s2}$, $R^{s3}$ and $R^{s4}$ may be bonded to each other to form an aliphatic hetero ring, and $X_3^-$ represents an organic or inorganic anion.

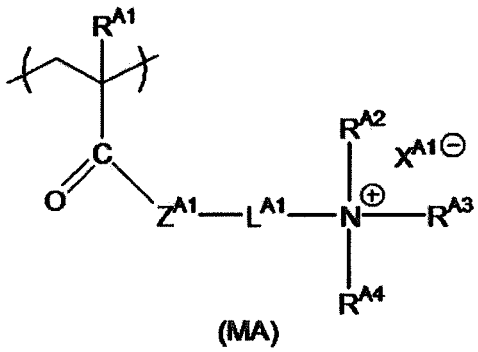

(MA)

In Formula MA, $R^{A1}$ represents a hydrogen atom or an alkyl group, $R^{A2}$ to $R^{A4}$ each independently represent an alkyl group or an aryl group, two or more of $R^{A2}$ to $R^{A4}$ may be bonded to each other to form a ring, $Z^{A1}$ represents -O- or -N(Ra)-, Ra represents a hydrogen atom or an alkyl group, $L^{A1}$ represents an alkylene group, and $X^{A1}$ represents a halogen ion, an aliphatic carboxylate ion, an aromatic carboxylate ion, an aliphatic sulfonate ion, or an aromatic sulfonate ion.

[Constitutional Unit Represented by Formula SM]

In Formula SM, in the case in which $R^{s2}$ to $R^{s4}$ each represent an alkyl group, the number of carbon atoms in the alkyl group is preferably 1 to 8, more preferably 1 to 4, and still more preferably 1 or 2. Examples of the alkyl group include methyl, ethyl, isopropyl, n-butyl, and 2-ethylhexyl.

In the case in which $R^{s2}$ to $R^{s4}$ each represent an aryl group, the number of carbon atoms in the aryl group is preferably 6 to 12, more preferably 6 to 10, and still more preferably 6 to 8. As the aryl group, a phenyl group is preferable.

$R^{s2}$, $R^{s3}$ and $R^{s4}$ each preferably represent an alkyl group and particularly represent a methyl group.

$R^{s2}$ and $R^{s3}$, or $R^{s2}$, $R^{s3}$ and $R^{s4}$ may be bonded to each other to form a ring, respectively. The ring that is formed by $R^{s2}$ and $R^{s3}$ being bonded to each other is preferably a 5-membered or 6-membered ring, and examples thereof include a pyrrolidine ring, a piperidine ring, a morpholine ring, a thiomorpholine ring, and a piperazine ring. Examples of the ring formed by $R^{s2}$, $R^{s3}$ and $R^{s4}$ being bonded to one another include a quinucridine ring and a triethylenediamine ring (1,4-diazabicyclo[2.2.2]octane ring). $X_3^-$ in Formula SM has the same meaning as $X_1^-$ in Formula CL, and a preferable range thereof is also the same. n3 has the same meaning as n1 in Formula CL, and a preferable range thereof is also the same.

The constitutional unit represented by Formula SM is preferably a constitutional unit derived from the following compounds SM-1 to SM-9, but the present invention is not limited to these.

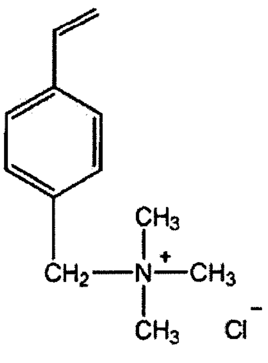

(SM-1)

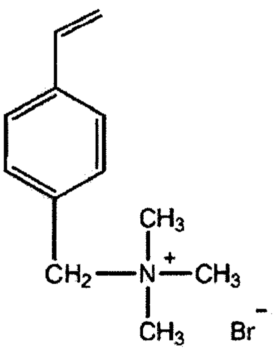

(SM-2)

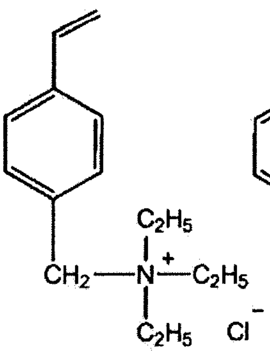

(SM-3)

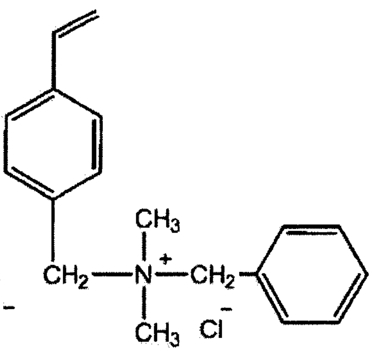

(SM-4)

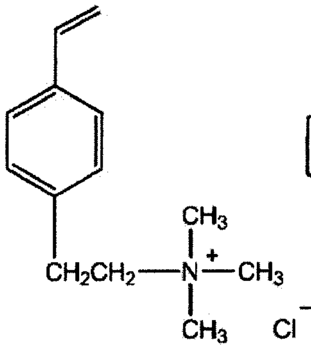

(SM-5)

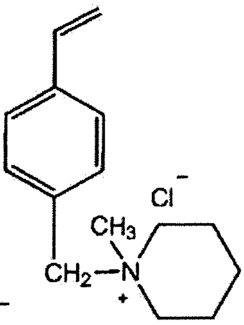

(SM-6)

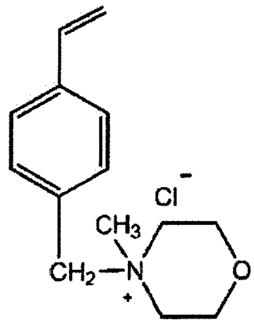

(SM-7)

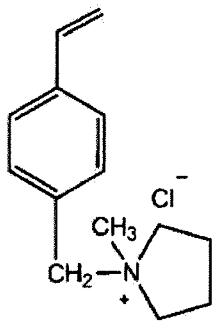

(SM-8)

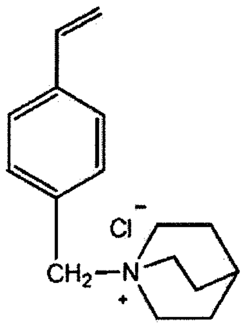

(SM-9)

As the constitutional unit represented by Formula SM is preferably a constitutional unit derived from a compound having a molecular weight of preferably 150 to 350, more preferably 150 to 300, most preferably 150 to 270.

[Constitutional Unit Represented by Formula MA]

The alkyl group of $R^{A1}$, $R^{A2}$ to $R^{A4}$, and Ra is a linear or branched alkyl group, and the number of carbon atoms is preferably 1 to 10, preferably 1 to 6, more preferably 1 to 4, still more preferably 1 or 2, and particularly preferably 1.
The number of carbon atoms in the aryl group in $R^{A2}$ to $R^{A4}$ is preferably 6 to 16, more preferably 6 to 12, and still more preferably 6 to 10. Examples of the aryl group in $R^{A2}$ to $R^{A4}$ include a phenyl group and a naphthyl group.
The ring formed by two or more of $R^{A2}$ to $R^{A4}$ being bonded to each other is preferably a 5-membered or 6-membered single ring or crosslinked ring, and the number of carbon atoms is preferably 4 to 16 and more preferably 4 to 10. Examples thereof include a pyrrolidine ring, a piperazine ring, a piperidine ring, a morpholine ring, a thiomorpholine ring, an indole ring, and a quinuclidine ring.
The number of carbon atoms of $L^{A1}$ is preferably 1 to 10, more preferably 2 to 10, still more preferably 2 to 6, particularly preferably 2 to 4, more particularly preferably 2 or 3, and most preferably 3.
Examples of the halogen ion in $X^{A1}$ include a fluorine ion, a chlorine ion, a bromine ion, and an iodine ion.
The number of carbon atoms of the aliphatic carboxylate ion in $X^{A1}$ is preferably 1 to 11, more preferably 2 to 7, still more preferably 2 to 5, particularly preferably 2 or 3, and most preferably 2.
The number of carbon atoms of the aliphatic sulfonate ion in $X^{A1}$ is preferably 1 to 11, more preferably 2 to 7, still more preferably 2 to 5, particularly preferably 2 or 3, and most preferably 2.
The aliphatic carboxylate ion may be any of carboxylic acids of saturated hydrocarbons and carboxylic acids of unsaturated hydrocarbons but carboxylic acids of saturated hydrocarbons are preferable.
The aliphatic sulfonate ion may be any of sulfonic acids of saturated hydrocarbons and sulfonic acids of unsaturated hydrocarbons but sulfonic acids of saturated hydrocarbons are preferable.
The aromatic sulfonate ion in $X^{A1}$ is preferably an aryl sulfonate ion or a hetero aryl sulfonate ion. Here, the hetero aryl is preferably a 5-membered or 6-membered ring, and the ring constituting hetero atom is preferably a nitrogen atom, an oxygen atom, or a sulfur atom and more preferably a nitrogen atom. The number of carbon atoms of the aromatic sulfonate ion is preferably 1 to 17, more preferably 2 to 13, and still more preferably 3 to 11. Examples thereof include a methanesulfonate anion, a benzenesulfonate anion, and a toluenesulfonate anion.
$R^{A1}$ is preferably a hydrogen atom or a methyl group and more preferably a hydrogen atom. $R^{A1}$ to $R^{A4}$ each

are preferably a methyl group or an ethyl group. $Z^{A1}$ is preferably -N(Ra)- and Ra is preferably a hydrogen atom. $X^{A1}$ is preferably a halogen atom.

The constitutional unit represented by Formula MA is preferably a constitutional unit derived from the following compounds MA-1 to MA-26, but the present invention is not limited thereto.

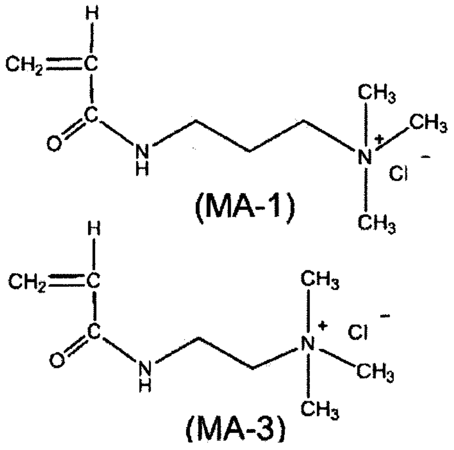
(MA-1)
(MA-3)

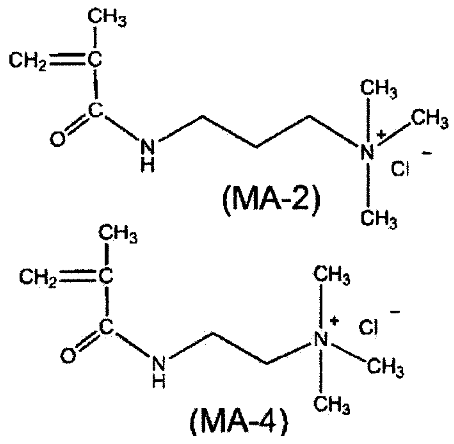
(MA-2)
(MA-4)

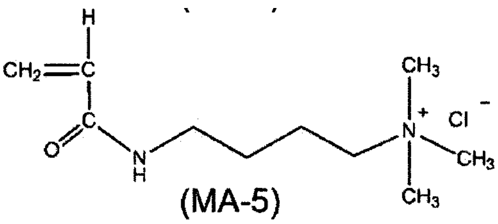
(MA-5)

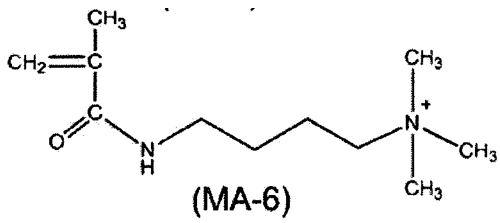
(MA-6)

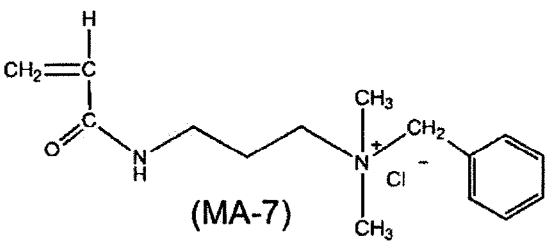
(MA-7)

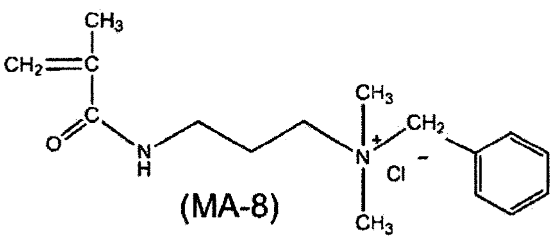
(MA-8)

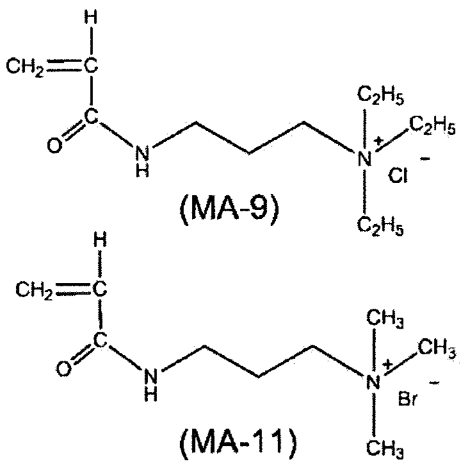
(MA-9)
(MA-11)

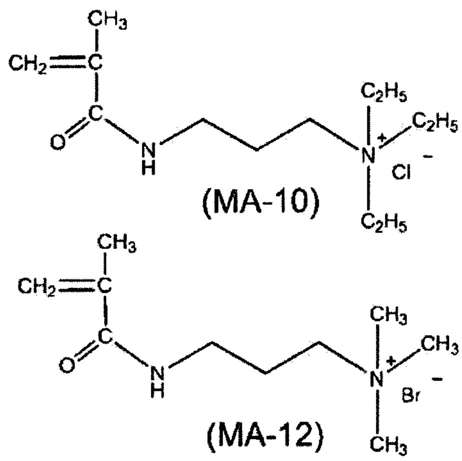
(MA-10)
(MA-12)

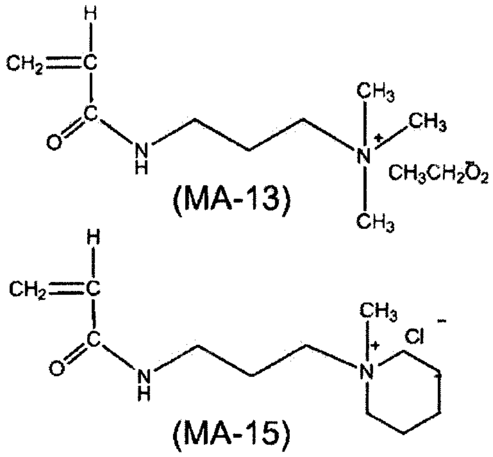

(MA-13)

(MA-15)

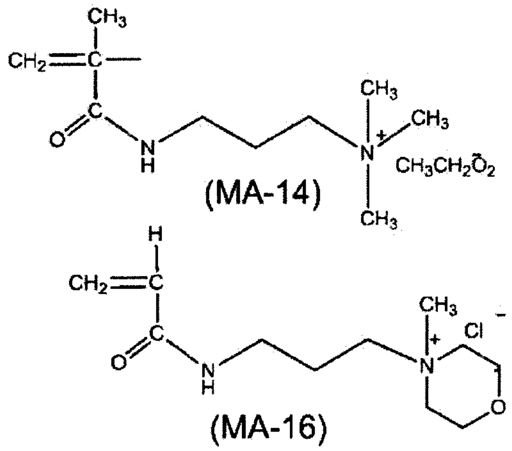

(MA-14)

(MA-16)

[0069]

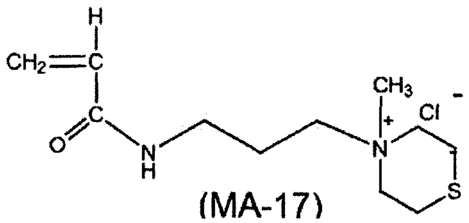

(MA-17)

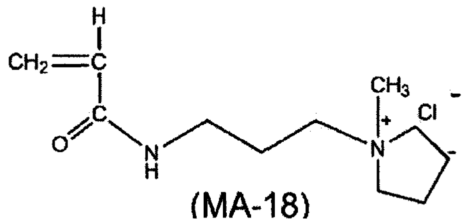

(MA-18)

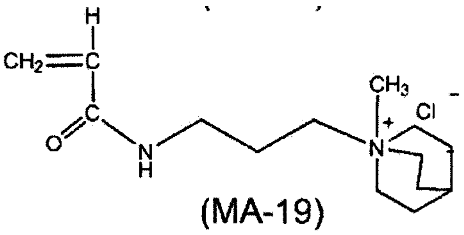

(MA-19)

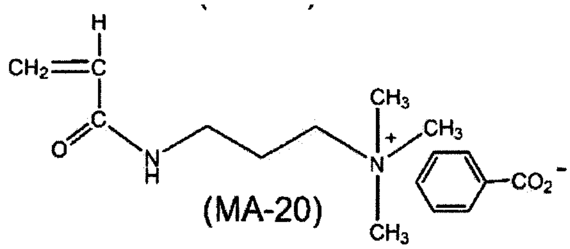

(MA-20)

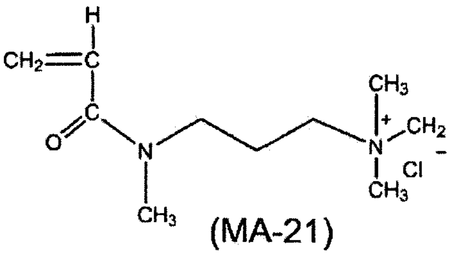

(MA-21)

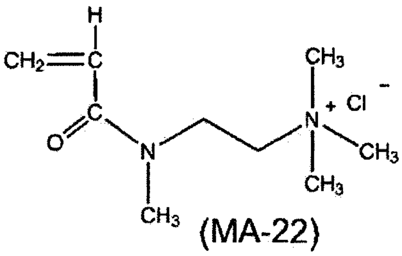

(MA-22)

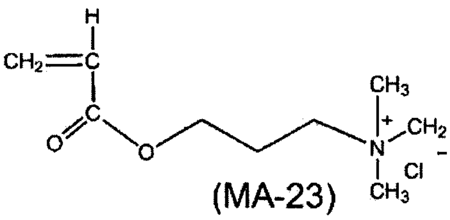

(MA-23)

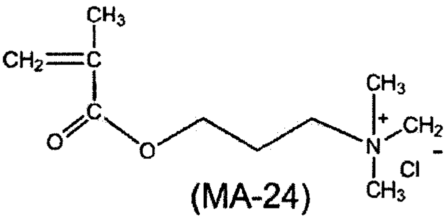

(MA-24)

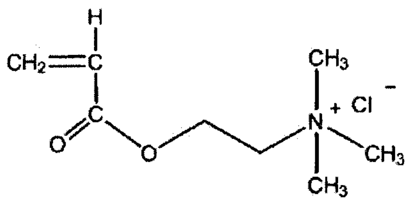

(MA-25)

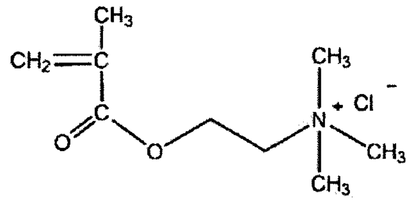

(MA-26)

The constitutional unit represented by Formula MA is preferably a constitutional unit derived from a compound having a molecular weight of 150 to 350, more preferably a constitutional unit derived from a compound having a molecular weight of 150 to 300, and most preferably a constitutional unit derived from a compound having a molecular weight of 150 to 270.

In the functional polymer membrane of the present invention, two or more constitutional units represented by Formula SM or MA may be used in combination.

In the present invention, with respect to the total mass of the ion exchange polymer, the content of Constitutional unit C is preferably 0% to 40% by mass, more preferably 0% to 30% by mass, still more preferably 0% to 20% by mass, particularly preferably 0% to 13% by mass, and most preferably 0% to 6% by mass.

In the present invention, the molar ratio between Constitutional unit A and Constitutional unit C in the ion exchange polymer is preferably Constitutional unit A: Constitutional unit C = 40:60 to 100:0, more preferably 60:40 to 100:0, still more preferably 70:30 to 100:0, particularly preferably 80:20 to 100:0, and most preferably 90:10 to 100:0.

<Ion exchange polymer Forming Composition>

The ion exchange polymer used in the present invention is preferably obtained by polymerizing a composition containing a compound represented by Formula CL2 (hereinafter, also referred to as "ion exchange polymer forming composition" or "composition") as Component A.

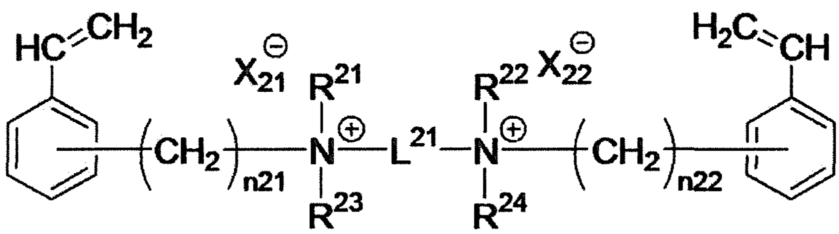

(CL2)

In Formula CL2, $L^{21}$ represents an alkylene group or an alkenylene group, $R^{21}$, $R^{22}$, $R^{23}$ and $R^{24}$ each independently represent an alkyl group or an aryl group, $R^{21}$ and $R^{22}$, and/or $R^{23}$ and $R^{24}$ may be bonded to each other to form a ring, n21 and n22 each independently represent an integer of 1 to 10, and $X_{21}^-$ and $X_{22}^-$ each independently represent an organic or inorganic anion.

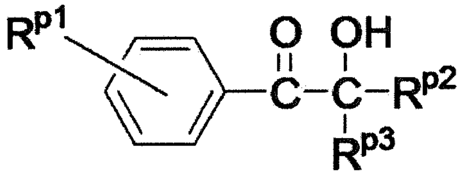

(PI)

In Formula PI, $R^{p1}$ represents a hydrogen atom, an alkyl group, an alkenyl group, alkoxy group or an aryloxy group, $R^{p2}$ and $R^{p3}$ each independently represent a hydrogen atom, an alkyl group, an alkenyl group, an alkoxy group or an aryloxy group, and $R^{p2}$ and $R^{p3}$ may be bonded to each other to form a ring.

Component A: Compound Represented by Formula CL2

$L^{21}$, $R^{21}$, $R^{22}$, $R^{23}$, $R^{24}$, n21, n22, $X_{21}^-$, and $X_{22}^-$ in Formula CL2 have the same meanings as $L^1$, $R^1$, $R^2$, $R^3$, $R^4$, n1, n2, $X_1^-$, and $X_2^-$ in Formula CL, respectively, and preferable ranges thereof are also the same.
As Component A, compounds represented by CL-1 to CL-12 above are preferable.
In addition, Component A can be synthesized by the methods described in JP2000-229917A or methods equivalent thereto.

[Content of Component A]

The ion exchange polymer forming composition in the present invention may contain one Component A or two or more Components A.
The content of Component A is 55% to 99% by mass, more preferably 70% to 99% by mass, still more preferably 75% to 99% by mass, particularly preferably 85% to 99% by mass, and most preferably 90% to 99% by mass with respect to the total solid content of the composition. The total solid content of the composition refers to an amount of components in the composition excluding a solvent.
When the content of Component A is within the above range, the physical strength of a membrane to be formed is excellent and the performance of the membrane is more excellent.
The molecular weight of Component A is preferably 300 to 600 and more preferably 300 to 500.

Component B: Compound Represented by Formula PI

The ion exchange polymer used in the present invention is preferably obtained by polymerizing a composition containing a compound represented by Formula CL2 as Component A and a photopolymerization initiator represented by Formula PI as Component B. In other words, the ion exchange polymer used in the present invention is obtained by polymerizing a compound represented by Formula CL2 using a composition containing the compound represented by Formula CL2 as Component A and a photopolymerization initiator represented by Formula PI as Component B.

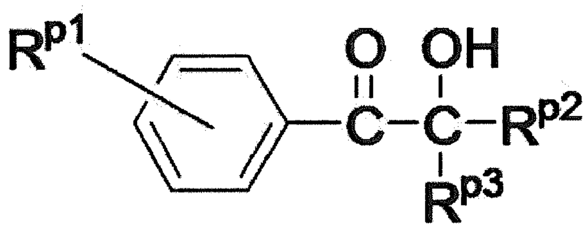

(PI)

In Formula PI, $R^{p1}$ represents a hydrogen atom, an alkyl group, an alkenyl group, alkoxy group or an aryloxy group, $R^{p2}$ and $R^{p3}$ each independently represent a hydrogen atom, an alkyl group, an alkenyl group, an alkoxy group or an aryloxy group, and $R^{p2}$ and $R^{p3}$ may be bonded to each other to form a ring.
$R^{p1}$ is preferably a hydrogen atom, an alkyl group having 1 to 18 carbon atoms, an alkenyl group having 2 to 10 carbon atoms, an alkoxy group having 1 to 10 carbon atoms, or an aryloxy group having 6 to 12 carbon atoms, and the alkyl group, and the alkenyl group, the alkoxy group, and the aryloxy group may each have a substituent. Although the substituent is not particularly limited, examples thereof include an alkyl group, an aryl group, an alkoxy group, aryloxy group, an acyl group, an acyloxy group, and a hydroxy group.
The aryl of the aryloxy group is preferably phenyl.
$R^{p1}$ is preferably a hydrogen atom, an alkyl group having 1 to 4 carbon atoms, or an alkoxy group having 1 to 4 carbon atoms, and among these, in the case of an alkoxy group, a methoxy group and 2-hydroxyethoxy group are preferable. In the case of an alkyl group, a methyl group substituted with a phenyl group is preferable, and it is also preferable that the phenyl group is substituted with -C(=O)-C($R^{p2}$)($R^{p3}$)(OH), and thereby a methylenebis form is formed in the molecule.
$R^{p2}$ and $R^{p3}$ are each independently preferably an alkyl group, an alkenyl group, an alkoxy group or an aryloxy group. An alkyl group having 1 to 8 carbon atoms, an alkenyl group having 2 to 8 carbon atoms, an alkoxy group having 1 to 8 carbon atoms, and an aryloxy group having 6 to 10 carbon atoms are preferable, an alkyl group is more preferable, and methyl is particularly preferable. The alkyl group, the alkenyl group, the alkoxy group, and the aryloxy group may

each have a substituent, and although the substituent is not particularly limited, examples thereof include an alkyl group, an aryl group, an alkoxy group, an aryloxy group, an acyl group, an acyloxy group, and a hydroxy group.

The ring formed by $R^{p2}$ and $R^{p3}$ being bonded to each other is preferably a 5-membered or 6-membered ring, and a cyclopentane ring and a cyclohexane ring are preferable.

Specific examples of a polymerization initiator represented by Formula (PI) are shown below, but the present invention is not limited to thereto.

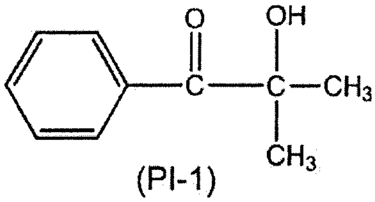

(PI-1)

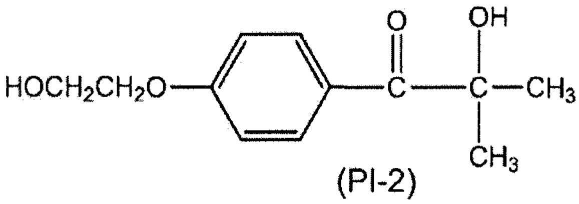

(PI-2)

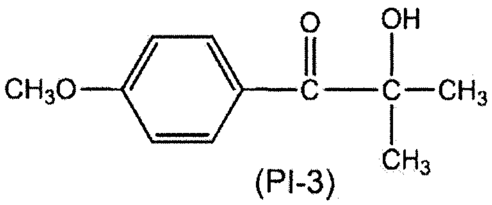

(PI-3)

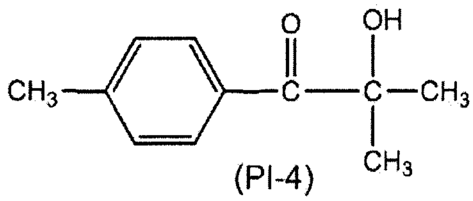

(PI-4)

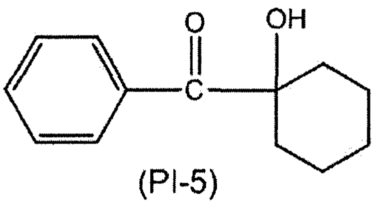

(PI-5)

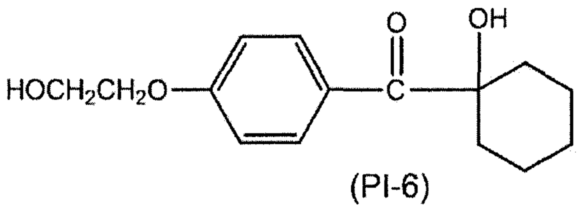

(PI-6)

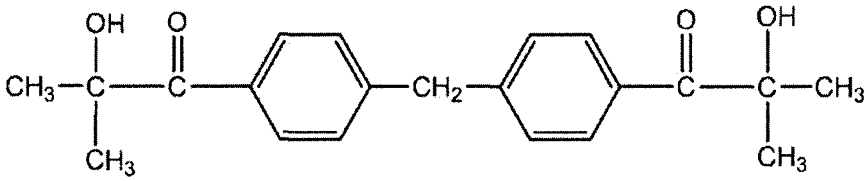

(PI-7)

Among the above compounds, as Component B, a compound represented by PI-2 or PI-4 is preferable.

The polymerization initiator represented by Formula (PI) is available from BASF Japan, Ltd. and the like.

The composition used for forming the ion exchange polymer forming composition in the present invention may contain one Component B or two or more Components B.

In the present invention, the content of Component B is preferably 0.1% to 10% by mass, more preferably 0.1% to 5% by mass, and particularly preferably 0.5% to 3% by mass with respect to the total solid content of the composition.

Component C: Compound Represented by Formula SM or Compound Represented by Formula MA

It is preferable that the ion exchange polymer forming composition in the present invention further contains a compound represented by Formula SM2 or a compound represented by Formula MA2 as Component C.

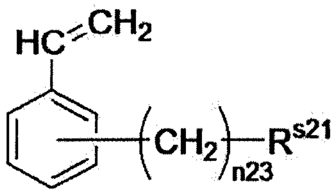

(SM2)

In Formula SM2, $R^{s21}$ represents $-N^+(R^{s22})(R^{s23})(R^{s24})(X_{23}^-)$, n23 represents an integer of 1 to 10, $R^{s22}$ to $R^{s24}$ each independently represent an alkyl group or an aryl group, $R^{s22}$ and $R^{s23}$, or $R^{s22}$, $R^{s23}$ and $R^{s24}$ may be bonded to each other to form an aliphatic hetero ring, and $X_{23}^-$ represents an organic or inorganic anion.

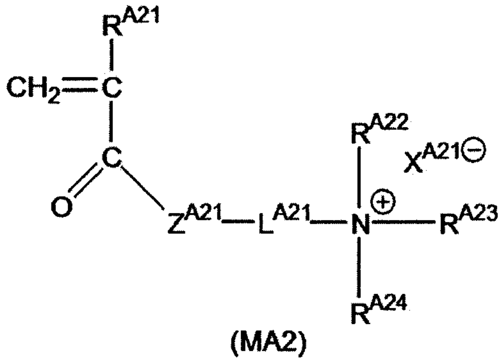

(MA2)

In Formula MA2, $R^{A21}$ represents a hydrogen atom or an alkyl group, $R^{A22}$ to $R^{A24}$ each independently represent an alkyl group or an aryl group, two or more of $R^{A2}$ to $R^{A4}$ may be bonded to each other to form a ring, $Z^{A21}$ represents -O- or -N(Ra)-, Ra represents a hydrogen atom or an alkyl group, $L^{A21}$ represents an alkylene group, and $X^{A21}$ represents a halogen ion, an aliphatic carboxylate ion, an aromatic carboxylate ion, an aliphatic sulfonate ion, or an aromatic sulfonate ion.

[Compound Represented by Formula SM2]

$R^{s21}$, $R^{s22}$, $R^{s23}$, $R^{s24}$, n23, and $X_{23}^-$ in Formula SM2 have the same meanings as $R^{s1}$, $R^{s2}$, $R^{s3}$, $R^{s4}$, n23, and $X_{23}^-$ in Formula SM, respectively, and preferable ranges thereof are also the same.
As the compound represented by Formula SM2, compounds represented by Formulae SM-1 to SM-9 above are preferable.
In addition, the compound represented by Formula SM2 can be synthesized by the methods described in JP2000-229917A and JP2000-212306A, or methods equivalent thereto. Further, these compounds are also available as commercially available products from Sigma-Aldrich Co. LLC., and the like.

[Compound represented by Formula MA2]

$R^{A21}$, $R^{A22}$, $R^{A23}$, $R^{A24}$, $Z^{A21}$, $L^{A21}$, and $X^{A21}$ in Formula MA2 have the same meanings as $R^{A1}$, $R^{A2}$, $R^{A3}$, $R^{A4}$, $Z^{A1}$, $L^{A1}$, and $X^{A1}$ in Formula MA, respectively, and preferable ranges thereof are also the same.
As the compound represented by Formula MA2, compounds represented by MA-1 to MA-26 above are preferable.
In the functional polymer membrane of the present invention, two or more compounds represented by Formula SM or MA may be used in combination.
In the present invention, the content of Component C is preferably 0% to 40% by mass, more preferably 0% to 30% by mass, still more preferably 0% to 20% by mass, particularly preferably 0% to 13% by mass, and most preferably 0% to 6% by mass with respect to the total solid content of the ion exchange polymer forming composition.
In the ion exchange polymer forming composition in the present invention, the molar ratio between Component A and Component C is preferably Component A: Component C = 40:60 to 100:0, more preferably 60:40 to 100:0, still more preferably 70:30 to 100:0, particularly preferably 80:20 to 100:0, and most preferably 90:10 to 100:0.

Component D: Solvent

It is preferable that the ion exchange polymer forming composition in the present invention further contain a solvent as Component D.
In the present invention, the content of the solvent in the ion exchange polymer forming composition is preferably 10 to 60 parts by mass and more preferably 20 to 40 parts by mass with respect to 100 parts by mass of the entire ion exchange polymer forming composition.
When the content of the solvent is within the above range, the ion exchange polymer forming composition as a coating liquid can be applied uniformly on a support and thus this case is preferable.
Regarding the solvent, water and/or any solvent having a solubility in water of 5% by mass or more is preferably used, and water and/or any solvent that is freely miscible with water is particularly preferably used. Therefore, a solvent selected from water and water-soluble solvents is preferable, and water only, a water-soluble solvent only or a mixed solvent thereof is preferable.
Particularly, preferable examples of the water-soluble solvent include an alcohol-based solvent, and an ether-based solvent, an amide-based solvent, a ketone-based solvent, a sulfoxide-based solvent, a sulfone-based solvent, a nitrile-based solvent, and an organic phosphorus-based solvent, which are aprotic polar solvents. Water and an alcohol-based solvent are preferable, and examples of the alcohol-based solvent include methanol, ethanol, isopropanol, n-butanol, ethylene glycol, propylene glycol, diethylene glycol, and dipropylene glycol. Among the alcohol-based solvents, ethanol, isopropanol, n-butanol, and ethylene glycol are more preferable, and isopropanol is particularly preferable. These may be used alone or in combination of two or more thereof. It is preferable to use water only, or to use water and a water-soluble solvent in combination, and it is more preferable to use water only, or to use water and at least one alcohol-based solvent in combination.
In addition, preferable examples of the aprotic polar solvent include dimethyl sulfoxide, dimethylimidazolidinone, sulfolane, N-methylpyrrolidone, dimethylformamide, acetonitrile, acetone, dioxane, tetramethylurea, hexamethylphosphorotriamide, pyridine, propionitrile, butanone, cyclohexanone, tetrahydrofuran, tetrahydropyran, ethylene glycol diacetate, and γ-butyrolactone, and among these, dimethyl sulfoxide, N-methylpyrrolidone, dimethylformamide, dimethylimidazolidinone, sulfolane, acetone, or acetonitrile, and tetrahydrofuran are preferable. These can be used alone or in combination of two or more thereof.

Component E: Polymerization Inhibitor

It is preferable that the ion exchange polymer forming composition in the present invention a polymerization inhibitor in order to impart stability to the coating liquid when a membrane is formed.
Regarding the polymerization inhibitor, any known polymerization inhibitor may be used and examples thereof include a phenolic compound, a hydroquinone compound, an amine compound, a mercapto compound, and a free radical derivative.
Examples of the phenolic compound include hindered phenol (a phenol having a t-butyl group at the ortho-position, and representative examples thereof include 2,6-di-t-butyl-4-methlyphenol), and bisphenol. Specific examples of the hydroquinone compound include monomethyl ether hydroquinone. Furthermore, specific examples of the amine compound include N-nitroso-N-phenylhydroxylamine and N,N-diethylhydroxylamine. Specific examples of the free radical derivative include 4-hydroxy-2,2,6,6,-tetramethyl piperidinyloxyl, and 2,2,6,6-tetramethylpiperidinel-1-oxyl. These polymerization inhibitors may be used alone or in combination of two or more thereof.
The content of the polymerization inhibitor is preferably 0.005% to 5% by mass, more preferably 0.01% to 1% by mass, and still more preferably 0.01% to 0.5% by mass with respect to the total solid content of the ion exchange polymer forming composition.

Component F: Polymerizable Compound other than Component A and Component C

The ion exchange polymer forming composition of the present invention may contain a polymerizable compound other than Component A and Component C (hereinafter, also referred to as "anther polymerizable compound") as Component F. Here, Component F is preferably a component having a function of adjusting the hydrophilicity or hydrophobicity and crosslinking density of the membrane in order to adjust the water permeability of the functional polymer membrane of the present invention and the electrical resistance of the membrane.
Another polymerizable compound may be any of a monomer, oligomer, and polymer, but is preferably a monomer. The monomer is preferably a monofunctional polymerizable compound. In the present invention, "oligomer" means a compound having a weight average molecular weight of more than 3,000 and 10,000 or less, and "polymer" means a compound having a weight average molecular weight of more than 10,000.
"Another polymerizable compound" refers to a polymerizable compound which does not corresponds to Component A and Component C above and examples of such another polymerizable compound includes known monomers such as acrylic esters, methacrylic esters, acrylamides, methacrylamides, vinylesters, styrenes, acrylonitrile, and maleic imide. When such monomers are used, physical properties such as membrane productivity, membrane strength, hydrophilicity, hydrophobicity, solubility, reactivity, and stability can be improved. As a method of synthesizing a monomer, for example, the item of ester synthesis in "Fifth Edition Experimental Science Course 16-Synthesis of Organic Compounds (II-1)", the items of handling and purification of monomers in "Fifth Edition Experimental Science Course 26-Polymer Chemistry", and the like edited by The Chemical Society of Japan and published by Maruzen Co., Ltd. can be referred to.

Among these, from the viewpoint of the stability and pH resistance of the obtained functional polymer membrane, one not having an ester bond, a (meth)acrylamide compound, a vinyl ether compound, an aromatic vinyl compound, a N-vinyl compound (a polymerizable monomer having an amide bond), and an allyl compound are preferable, and a (meth)acrylamide compound is particularly preferable.

Examples of other monofunctional polymerizable compound include compounds described in JP2008-208190A and JP2008-266561A.

<Other Components and the like>

The ion exchange polymer forming composition in the present invention may include, in addition to Components A to F, a surfactant, a polymer dispersant, an anti-cratering agent, and the like.

[Surfactant]

Various polymer compounds can be added to the ion exchange polymer forming composition in the present invention in order to adjust the physical properties of the membrane. Examples of the polymer compound that can be used include an acrylic polymer, a polyurethane resin, a polyamide resin, a polyester resin, an epoxy resin, a phenolic resin, a polycarbonate resin, a polyvinyl butyral resin, a polyvinyl formal resin, shellac, a vinyl-based resin, an acrylic resin, a rubber-based resin, waxes, and other natural resins. Also, these compounds may be used in combination of two or more thereof.

Further, in order to adjust the liquid physical properties of the coating liquid which is the ion exchange polymer forming composition, a nonionic surfactant, a cationic surfactant, an organic fluoro compound, and the like can also be added to the composition.

Specific examples of the surfactant include anionic surfactants such as an alkyl benzenesulfonic acid salt, an alkyl naphthalenesulfonic acid salt, a higher fatty acid salt, a sulfonic acid salt of a higher fatty acid ester, a sulfuric acid ester salt of a higher alcohol ether, a sulfonic acid salt of a higher alcohol ether, an alkylcarboxylic acid salt of a higher alkyl sulfonamide, and an alkyl phosphoric acid salt; nonionic surfactants such as a polyoxyethylene alkyl ether, a polyoxyethylene alkyl phenyl ether, a polyoxyethylene fatty acid ester, a sorbitan fatty acid ester, an ethylene oxide adduct of acetylene glycol, an ethylene oxide adduct of glycerin, and a polyoxyethylene sorbitan fatty acid ester; and in addition to these, amphoteric surfactants such as an alkyl betaine and an amidobetaine, a silicon-based surfactant, and a fluorine-based surfactant. The surfactant can be appropriately selected from known surfactants and derivatives thereof.

[Polymer Dispersant]

The ion exchange polymer forming composition used in the present invention may include a polymer dispersant.

Specific examples of the polymer dispersant include polyvinylpyrrolidone, polyvinyl alcohol, polyvinyl methyl ether, polyethylene oxide, polyethylene glycol, polypropylene glycol, and polyacrylamide, and among these, it is preferable to use polyvinylpyrrolidone.

[Anti-Cratering Agent]

An anti-cratering agent is also referred to as a surface regulating agent, a leveling agent, or a slipping agent, and is intended to suppress surface irregularity of a membrane surface. Examples thereof include compounds having structures of an organically modified polysiloxane (mixture of a polyethersiloxane and a polyether), a polyether-modified polysiloxane copolymer, and a silicon-modified copolymer.

Examples of commercially available products thereof include TEGO GLIDE 432, TEGO GLIDE 110, TEGO GLIDE 130, TEGO GLIDE 406, TEGO GLIDE 410, TEGO GLIDE 411, TEGO GLIDE 415, TEGO GLIDE 420, TEGO GLIDE 435, TEGO GLIDE 440, TEGO GLIDE 450, TEGO GLIDE 482, TEGO GLIDE A115, TEGO GLIDE B1484, and TEGO GLIDE ZG400 (all product names), manufactured by Evonik Industries.

The content of the anti-cratering agent is preferably 0.01% to 10% by mass, more preferably 0.01% to 5% by

mass, and still more preferably 0.01 to 2% by mass with respect to the total solid content in the ion exchange polymer forming composition.

In addition to those components described above, the ion exchange polymer forming composition in the present invention may optionally further include, for example, a viscosity increasing agent and a preservative.

<Support>

The functional polymer membrane of the present invention preferably has a support and more preferably has a porous support.

Many technologies can be utilized in order to increase the mechanical strength of the membrane. For example, a support can be used as a reinforcing material of the membrane, and preferably, a porous support can be used. This porous support can be used to constitute a portion of the membrane by applying the ion exchange polymer forming composition to this porous support and/or impregnating the porous support with the ion exchange polymer forming composition, and then polymerizing the ion exchange polymer forming composition.

Examples of the support include a resin film, a woven fabric, a nonwoven fabric, and a sponge. Among these, a nonwoven fabric is preferable.

Examples of the porous support include a woven fabric, a nonwoven fabric, a spongy film, and a film having fine through-holes.

Examples of the porous support include a synthetic woven fabric, a synthetic nonwoven fabric, a spongy film, and a film having fine through-holes. Examples of the material that forms the porous support of the invention include a polyolefin (polyethylene, polypropylene, or the like), polyacrylonitrile, polyvinyl chloride, a polyester, a polyamide, and copolymers thereof. Alternatively, examples of the porous support include porous films based on a polysulfone, a polyether sulfone, polyphenylene sulfone, polyphenylene sulfide, a polyimide, a polyethermide, a polyamideimide, polyacrylonitrile, a polycarbonate, a polyacrylate, cellulose acetate, poly(4-methyl-1-pentene), polyvinylidene fluoride, polytetrafluoroethylene, polyhexafluoropropylene, polychlorotrifluoroethylene, and copolymers thereof. Among these, according to the invention, a polyolefin is preferable from the viewpoint of chemical resistance and physical durability.

Commercially available porous supports and reinforcing materials are marketed by, for example, Japan Vilene Co., Ltd., Freudenberg Filtration Technologies (Novatexx materials), and Sefar AG.

It is preferable that the support is hydrophilic. Regarding a technique for imparting hydrophilicity to the support, general treatment methods such as a corona treatment, an ozone treatment, a sulfuric acid treatment, and a silane coupling agent treatment can be used.

The thickness of the support is preferably 10 to 500 $\mu$m, more preferably 20 to 400 $\mu$m, still more preferably 50 to 300 $\mu$m, and particularly preferably 80 to 300 $\mu$m.

It is preferable that the functional polymer membrane of the present invention is a membrane including a resin having constitutional units derived from Component A and Component B on the surface and/or in the inside of the porous support.

In addition, the functional polymer membrane of the present invention is preferably a membrane including water and more preferably a membrane formed by incorporating water into a resin having constitutional units derived from Component A and Component C above to be in a gel state.

(Method of Producing Functional Polymer Membrane)

The method of producing a functional polymer membrane for removing nitrate ions of the present invention includes a curing process of polymerizing a composition containing a compound represented by Formula CL2 as Component A, the ion exchange capacity represented by Equation a is 2.5 meq/g or more and 6.0 meq/g or less, and the crosslinking group density represented by Equation b is 0.9 mmol/g or more and 2.0 mmol/g or less.

A preferable embodiment of the composition is the same as the preferable embodiment of the ion exchange polymer forming composition used in the present invention.

The conditions for forming the functional polymer membrane of the present invention are not particularly limited but the temperature is preferably -30°C to 100°C, more preferably -10°C to 80°C, and particularly preferably 5°C to 60°C.

In the present invention, gas such as air and oxygen may co-exist when the membrane is formed but it is preferable that the membrane is formed in an inert gas.

<Application Process>

It is preferable that the method of producing a functional polymer membrane of the present invention includes an application process of applying the composition to a support or impregnating a support with the composition.

The functional polymer membrane of the present invention can be produced in a batch manner (batch system)

using a fixed support but the membrane can also be produced in a continuous manner (continuous system) using a mobile support. The support may have a roll shape that is continuously wound. Meanwhile, in the case of a continuous system, a process of placing a support on a continuously moving belt, and forming a membrane by performing continuous application of a coating liquid which is the ion exchange polymer forming composition, followed by polymerization and curing, can be continuously carried out. However, only any one of the application process and the membrane forming process may be carried out continuously.

Separately from the support, a temporary support (after completion of the polymerization, the membrane is peeled off from the temporary support) may be used until the porous support is impregnated with the ion exchange polymer forming composition and the polymerization is completed.

Regarding such a temporary support, it is not necessary to consider material permeation, and any support may be used as long as it can be fixed for membrane formation, including, for example, a metal plate such as an aluminum plate.

In addition, a porous support can be impregnated with the composition, and the composition can be polymerized without using a support other than the porous support.

The ion exchange polymer forming composition can be applied on or impregnated into the porous support by various methods, for example, curtain coating, extrusion coating, air knife coating, slide coating, nip roll coating, forward roll coating, reverse roll coating, immersion coating, kiss coating, rod bar coating, or spray coating. Application of plural layers can be carried out simultaneously or continuously. In order to perform simultaneous application of plural layers, curtain coating, slide coating, slot die coating, and extrusion coating are preferable.

Production of a functional polymer membrane by a continuous system is carried out continuously by applying the ion exchange polymer forming composition to a moving support, and more preferably by means of a production unit which includes an ion exchange polymer forming composition application unit, a radiation source for polymerizing a polymerizable compound in the ion exchange polymer forming composition, a membrane collecting unit, and means for moving the support from the ion exchange polymer forming composition application unit to the radiation source and the membrane collecting unit.

In the present invention, it is preferable that the functional polymer membrane of the present invention is prepared through the processes of (i) carrying out at least one of applying a coating liquid which is the ion exchange polymer forming composition to a support, or impregnating the support with the ion exchange polymer forming composition, (ii) irradiating the ion exchange polymer forming composition with light, and (iii) removing the membrane formed in compliance with desire from the support.

In the production unit, the ion exchange polymer forming composition application unit can be placed at a position upstream of the radiation source of energy rays (also referred to as "active radiation"), and the radiation source is placed in a position upstream of the membrane collection unit. In order to obtain fluidity sufficient for applying the ion exchange polymer forming composition using a high-speed coating machine, the ion exchange polymer forming composition of the present invention preferably has a viscosity of less than 4,000 mPa·s, more preferably 1 to 1,000 mPa·s, and most preferably 1 to 500 mPa·s, when measured at 35°C. For coating methods such as slide bead coating, the preferred viscosity is 1 to 100 mPa·s when measured at 35°C.

With a high speed coating machine, the coating liquid, which is the ion exchange polymer forming composition, can be applied on a moving support at a speed of more than 15 m/min, and can also be applied at a speed of more than 400 m/min at most.

Particularly, in the case in which it is intended that the support is used to enhance the mechanical strength of the membrane, this support may be subjected to a corona discharge treatment, a glow discharge treatment, a flame treatment, an ultraviolet irradiation treatment or the like, for example, to improve wettability and adhesive force of the support, before the ion exchange polymer forming composition is applied to the support.

<Curing Process>

The curing process in the method of producing a functional polymer membrane of the present invention is preferably a process of irradiating the composition with energy rays and polymerizing the polymerizable compounds in the composition.

[Irradiation with Energy Ray]

During the polymerization, the polymerizable compounds such as Component A and Component C to form a polymer. The polymerization is preferably carried out by irradiation with energy rays (more preferably irradiated with light) under conditions in which polymerization is caused at a quickness speed enough to form the membrane within 30 seconds.

The irradiation of the ion exchange polymer forming composition with energy rays is preferably initiated within 60 seconds, more preferably initiated within 15 seconds, particularly initiated within 5 seconds, and most preferably

initiated within 3 seconds after the ion exchange polymer forming composition is applied to the support.

The polymerization of the polymerizable compounds is carried out by irradiating the ion exchange polymer forming composition with energy rays preferably for less than 10 seconds, more preferably for less than 5 seconds, particularly preferably for less than 3 seconds, and most preferably for less than 2 seconds. In a continuous method, irradiation is carried out continuously, and the polymerization time is determined in consideration of the speed at which the ion exchange polymer forming composition passes through the irradiated beam and moves.

In the case of using high intensity ultraviolet radiation (UV light) for the polymerization, there is a possibility of a significant amount of heat being generated. Therefore, in order to prevent overheating, it is preferable to cool at least one of the lamp of the light source and the support to which the ion exchange polymer forming composition is applied, or the light source and the support on which the ion exchange polymer forming composition is applied using cooling air or the like. In a case in which a noticeable dose of infrared light (IR light) is irradiated together with a UV beam, the UV light is irradiated using an IR-reflective quartz plate as a filter.

The active radiation is preferably ultraviolet rays. The irradiation wavelength is preferably any wavelength which conforms to the absorption wavelength of any photopolymerization initiator included in the ion exchange polymer forming composition and examples thereof include wavelengths of UV-A (400 to 320 nm), UV-B (320 to 280 nm), UV-C (280 to 200 nm).

Examples of the ultraviolet source include a mercury arc lamp, a carbon arc lamp, a low pressure mercury lamp, a medium pressure mercury lamp, a high pressure mercury lamp, a swirl-flow plasma arc lamp, a metal halide lamp, a xenon lamp, a tungsten lamp, a halogen lamp, a laser, and an ultraviolet emitting diode. A medium pressure or high pressure mercury vapor type ultraviolet light emitting lamp is particularly preferable. In addition to this, in order to modify the light emission spectrum of the lamp, additives such as a metal halide may be present. A lamp having the maximum emission at 200 to 450 nm is particularly suitable in most cases.

The energy output of the radiation source of the active radiation is preferably 20 to 1,000 W/cm, and more preferably 40 to 500 W/cm. However, the energy output may be higher than this range or lower than this range as long as a desired exposure dose can be realized. The exposure intensity is one of the parameters which can be used in order to control the degree of polymerization of the membrane. The exposure dose is measured by a High Energy UV Radiometer (UV Power Puck TM from EIT Instrument Markets, Inc.), in the UV-B range, and the exposure dose is preferably at least 40 $mJ/cm^2$ or more, more preferably 100 to 2,000 $mJ/cm^2$, and more preferably 150 to 1,500 $mJ/cm^2$. The exposure time can be freely selected but it is preferable that the exposure time is short. The exposure time is most preferably less than 2 seconds.

In the case of a fast application speed, it is preferable to use plural light sources in order to obtain a required exposure dose. In this case, these plural light sources may have identical or different exposure intensities.

<Separation Membrane Module and Ion Exchange Device>

The polymer membrane of the present invention is preferably combined with a porous support to form a composite membrane and a separation membrane module using the polymer membrane is more preferable. In addition, an ion exchange device having means for performing ion exchange, desalting or purification using the polymer membrane of the present invention, a composite membrane, or a polymer membrane module, can be obtained. The ion exchange device can be also suitably used as a fuel cell.

It is possible to suitably use the polymer membrane of the present invention as a module. Examples of the module include membranes of spiral type, hollow fiber type, pleated type, tubular type, plate and frame type, and stack type.

The functional polymer membrane of the present invention is mainly intended to be used for removing nitrate ions by particularly selective permeation of ions. However, it is considered that the functional polymer membrane of the present invention is not limited to ion exchange and can be also used for reverse osmosis, forward osmosis, and gas separation.

## Examples

Hereinafter, the present invention will be described in more detail by way of Examples. However, the present invention is not intended to be limited to these Examples. The materials, amounts used, ratios, processing contents, processing procedures, and the like that are indicated in Examples below can be suitably modified without departing from the spirit of the present invention. Accordingly, the scope of the present invention is not limited by the specific examples given below. Meanwhile, unless particularly stated otherwise, units "parts" and "% are on a mass basis.

(Example 1)

(Production of Anion Exchange Membrane)

A composition having a composition shown in Table 1 below (unit: g) (ion exchange polymer forming composition) was manually applied to an aluminum plate using an applicator having a clearance of 200 μm at a speed of about 5 m/min, and subsequently, a nonwoven fabric (FO-2223-10, manufactured by Freudenberg Group, thickness: 100 μm) was impregnated with the ion exchange polymer forming composition (coating liquid). Any excess coating liquid on the aluminum plate was removed using a rod that was not wound with a wire. The temperature of the coating liquid at the time of application was about 25°C (room temperature). The nonwoven fabric (support) impregnated with the composition was exposed and the composition was subjected to a polymerization reaction using a UV exposure machine (manufactured by Fusion UV Systems Inc., type: Light Hammer 10, D-valve, conveyor speed: 1.0 to 9.5 m/min, and 100% intensity). Thus, an anion exchange membrane was produced. The amount of exposure was 1,000 to 5,000 mJ/$cm^2$ in a UV-A region. The amount of exposure could be controlled by changing the conveyor speed and sufficient curing could be obtained. That is, a component eluted when the anion exchange membrane was immersed in pure water was analyzed by a liquid chromatography, and the minimum amount of exposure in which the elution of monomers is equal or lower than the detection limit was obtained. The obtained membrane was removed from the aluminum plate and was stored for at least 12 hours in a 0.1 M aqueous NaCl solution.

(Examples 2 to 37)

Anion exchange membranes of Examples 2 to 37 were produced in the same manner as in Example 1 except that the composition of the ion exchange polymer forming composition in the production of the anion exchange membrane of Example 1 was changed to the compositions shown in Tables 1 to 3 below.

(Comparative Example 1)

An anion exchange membrane NEOSEPTA AMX, which is commercially available from ASTOM Corporation, was used as it is.

(Comparative Examples 2 to 19)

Anion exchange membranes of Comparative Examples 2 to 19 were respectively produced in the same manner as in Example 1 except that the composition of the ion exchange polymer forming composition in the production of the anion exchange membrane of Example 1 was changed the compositions shown in Tables 4 to 5 below.

[Table 1]

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Cationic monomer (Component C) | SM-1 | 29.84 | 23.41 | 19.61 | 15.23 | 12.30 | 8.21 | 3.54 | - | 29.84 | 23.41 | 19.61 | 15.23 | 12.30 |
| | MA-1 75% aqueous solution | - | - | - | - | - | - | - | - | - | - | - | - | - |
| | MA-26 80% aqueous solution | - | - | - | - | - | - | - | - | - | - | - | - | - |
| Crosslinking agent (Component A) | CL-1 | 39.44 | 45.87 | 49.67 | 54.05 | 56.98 | 61.07 | 65.74 | 69.30 | 39.44 | 45.87 | 49.67 | 54.05 | 56.98 |
| | CL-8 | - | - | - | - | - | - | - | - | - | - | - | - | - |
| | DVB | - | - | - | - | - | - | - | - | - | - | - | - | - |
| Polymerization initiator (Component B) | Irgacure 2959 | 0.70 | 0.70 | 0.70 | 0.70 | 0.70 | 0.70 | 0.70 | 0.70 | - | - | - | - | - |
| | Darocur 1173 | - | - | - | - | - | - | - | - | 0.70 | 0.70 | 0.70 | 0.70 | 0.70 |
| Polymerization inhibitor | 4OH-TEMPO | 0.02 | 0.02 | 0.02 | 0.02 | 0.02 | 0.02 | 0.02 | 0.02 | 0.02 | 0.02 | 0.02 | 0.02 | 0.02 |
| Solvent (Component D) | Water | 30.00 | 30.00 | 30.00 | 30.00 | 30.00 | 30.00 | 30.00 | 30.00 | 30.00 | 30.00 | 30.00 | 30.00 | 30.00 |
| | NMP | - | - | - | - | - | - | - | - | - | - | - | - | - |
| Total | | 100 | 100 | 100 | 100 | 100 | 100 | 100 | 100 | 100 | 100 | 100 | 100 | 100 |
| Proportion of Component C mol% | | 59.9% | 50.1% | 43.8% | 35.7% | 29.9% | 21.0% | 9.6% | 0.0% | 59.9% | 50.1% | 43.8% | 35.7% | 29.9% |
| Proportion of Component A mol% | | 40.1% | 49.9% | 56.2% | 64.3% | 70.1% | 79.0% | 90.4% | 100.0% | 40.1% | 49.9% | 56.2% | 64.3% | 70.1% |
| CL mass/solid content | | 56.3% | 65.5% | 71.0% | 77.2% | 81.4% | 87.2% | 93.9% | 99.0% | 56.3% | 65.5% | 71.0% | 77.2% | 81.4% |
| Mass proportion of resin | | 70.0% | 70.0% | 70.0% | 70.0% | 70.0% | 70.0% | 70.0% | 70.0% | 70.0% | 70.0% | 70.0% | 70.0% | 70.0% |
| Ion exchange capacity meq/g | | 3.30 | 3.30 | 3.31 | 3.31 | 3.31 | 3.31 | 3.32 | 3.32 | 3.30 | 3.30 | 3.31 | 3.31 | 3.31 |
| Crosslinking group density mmol/g | | 0.95 | 1.10 | 1.19 | 1.30 | 1.37 | 1.46 | 1.58 | 1.66 | 0.95 | 1.10 | 1.19 | 1.30 | 1.37 |

[Table 2]

| | | Example 14 | Example 15 | Example 16 | Example 17 | Example 18 | Example 19 | Example 20 | Example 21 | Example 22 | Example 23 | Example 24 | Example 25 | Example 26 |
|---|---|---|---|---|---|---|---|---|---|---|---|---|---|---|
| Cationic monomer (Component C) | SM-1 | 8.21 | 3.54 | - | 25.48 | 18.34 | 14.12 | 9.25 | 6.01 | 1.47 | - | - | - | - |
| | MA-1 75% aqueous solution | - | - | - | - | - | - | - | - | - | - | 39.78 | 31.21 | 26.15 |
| | MA-26 80% aqueous solution | - | - | - | - | - | - | - | - | - | - | - | - | - |
| Crosslinking agent (Component A) | CL-1 | 61.07 | 65.74 | 69.30 | - | - | - | - | - | - | - | 39.44 | 45.87 | 49.67 |
| | CL-8 | - | - | - | 43.80 | 50.94 | 55.16 | 60.03 | 63.27 | 67.81 | 69.28 | - | - | - |
| | DVB | - | - | - | - | - | - | - | - | - | - | - | - | - |
| Polymerization initiator (Component B) | Irgacure 2959 | - | - | - | 0.70 | 0.70 | 0.70 | 0.70 | 0.70 | 0.70 | 0.70 | - | - | - |
| | Darocur 1173 | 0.70 | 0.70 | 0.70 | - | - | - | - | - | - | - | 0.70 | 0.70 | 0.70 |
| Polymerization inhibitor | 4OH-TEMPO | 0.02 | 0.02 | 0.02 | 0.02 | 0.02 | 0.02 | 0.02 | 0.02 | 0.02 | 0.02 | 0.02 | 0.02 | 0.02 |
| Solvent (Component D) | Water | 30.00 | 30.00 | 30.00 | 30.00 | 30.00 | 30.00 | 30.00 | 30.00 | 30.00 | 30.00 | 20.05 | 22.20 | 23.46 |
| | NMP | - | - | - | - | - | - | - | - | - | - | - | - | - |
| Total | | 100 | 100 | 100 | 100 | 100 | 100 | 100 | 100 | 100 | 100 | 100 | 100 | 100 |
| Proportion of Component C mol% | | 21.0% | 9.6% | 0.0% | 56.0% | 44.1% | 35.9% | 25.2% | 17.2% | 4.5% | 0.0% | 60.5% | 50.8% | 44.4% |
| Proportion of Component A mol% | | 79.0% | 90.4% | 100.0% | 44.0% | 55.9% | 64.1% | 74.8% | 82.8% | 95.5% | 100.0% | 39.5% | 49.2% | 55.6% |
| CL mass/solid content | | 87.2% | 93.9% | 99.0% | 62.6% | 72.8% | 78.8% | 85.8% | 90.4% | 96.9% | 99.0% | 56.3% | 65.5% | 71.0% |
| Mass proportion of resin | | 70.0% | 70.0% | 70.0% | 70.0% | 70.0% | 70.0% | 70.0% | 70.0% | 70.0% | 70.0% | 70.0% | 70.0% | 70.0% |
| Ion exchange capacity meq/g | | 3.31 | 3.32 | 3.32 | 3.09 | 3.06 | 3.05 | 3.03 | 3.01 | 3.00 | 2.99 | 3.33 | 3.33 | 3.33 |
| Crosslinking group density mmol/g | | 1.46 | 1.58 | 1.66 | 0.95 | 1.10 | 1.19 | 1.30 | 1.37 | 1.46 | 1.49 | 0.95 | 1.10 | 1.19 |

[Table 3]

| | | Example 27 | Example 28 | Example 29 | Example 30 | Example 31 | Example 32 | Example 33 | Example 34 | Example 35 | Example 36 | Example 37 |
|---|---|---|---|---|---|---|---|---|---|---|---|---|
| Cationic monomer (Component C) | SM-1 | - | - | - | - | - | - | - | - | - | - | - |
| | MA-1 75% aqueous solution | 20.30 | 16.41 | 10.95 | 4.72 | - | - | - | - | - | - | - |
| | MA-26 80% aqueous solution | - | - | - | - | 37.29 | 29.26 | 24.51 | 19.03 | 15.38 | 10.27 | 4.42 |
| Crosslinking agent (Component A) | CL-1 | 54.05 | 56.98 | 61.07 | 65.74 | 39.44 | 45.87 | 49.67 | 54.05 | 56.98 | 61.07 | 65.74 |
| | CL-8 | - | - | - | - | - | - | - | - | - | - | - |
| | DVB | - | - | - | - | - | - | - | - | - | - | - |
| Polymerization initiator (Component B) | Irgacure 2959 | - | - | - | - | - | - | - | - | - | - | - |
| | Darocur 1173 | 0.70 | 0.70 | 0.70 | 0.70 | 0.70 | 0.70 | 0.70 | 0.70 | 0.70 | 0.70 | 0.70 |
| Polymerization inhibitor | 4OH-TEMPO | 0.02 | 0.02 | 0.02 | 0.02 | 0.02 | 0.02 | 0.02 | 0.02 | 0.02 | 0.02 | 0.02 |
| Solvent (Component D) | Water | 24.92 | 25.90 | 27.26 | 28.82 | 22.54 | 24.15 | 25.10 | 26.19 | 26.92 | 27.95 | 29.12 |
| | NMP | - | - | - | - | - | - | - | - | - | - | - |
| Total | | 100 | 100 | 100 | 100 | 100 | 100 | 100 | 100 | 100 | 100 | 100 |
| Proportion of Component C mol% | | 36.3% | 30.4% | 21.4% | 9.8% | 60.3% | 50.6% | 44.2% | 36.1% | 30.3% | 21.3% | 9.8% |
| Proportion of Component A mol% | | 63.7% | 69.6% | 78.6% | 90.2% | 39.7% | 49.4% | 55.8% | 63.9% | 69.7% | 78.7% | 90.2% |
| CL mass/solid content | | 77.2% | 81.4% | 87.2% | 93.9% | 56.3% | 65.5% | 71.0% | 77.2% | 81.4% | 87.2% | 93.9% |
| Mass proportion of resin | | 70.0% | 70.0% | 70.0% | 70.0% | 70.0% | 70.0% | 70.0% | 70.0% | 70.0% | 70.0% | 70.0% |
| Ion exchange capacity meq/g | | 3.33 | 3.33 | 3.32 | 3.32 | 3.33 | 3.32 | 3.32 | 3.32 | 3.32 | 3.32 | 3.32 |
| Crosslinking group density mmol/g | | 1.30 | 1.37 | 1.46 | 1.58 | 0.95 | 1.10 | 1.19 | 1.30 | 1.37 | 1.46 | 1.58 |

[Table 4]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|---|---|---|
| Cationic monomer (Component C) | SM-1 | - | 54.67 | 48.83 | 40.06 | 53.06 | 46.57 | 36.83 | - | - | - | - | - | - |
| | MA-1 75% aqueous solution | - | - | - | - | - | - | - | 72.89 | 65.10 | 53.42 | - | - | - |
| | MA-26 80% aqueous solution | - | - | - | - | - | - | - | - | - | - | 68.34 | 61.03 | 50.08 |
| Crosslinking agent (Component A) | CL-1 | - | 14.61 | 20.45 | 29.22 | - | - | - | 14.61 | 20.45 | 29.22 | 14.61 | 20.45 | 29.22 |
| | CL-8 | - | - | - | - | 16.22 | 22.71 | 32.45 | - | - | - | - | - | - |
| | DVB | - | - | - | - | - | - | - | - | - | - | - | - | - |
| Polymerization initiator (Component B) | Irgacure 2959 | - | 0.70 | 0.70 | 0.70 | 0.70 | 0.70 | 0.70 | 0.70 | 0.70 | 0.70 | 0.70 | 0.70 | 0.70 |
| | Darocur 1173 | - | - | - | - | - | - | - | - | - | - | - | - | - |
| Polymerization inhibitor | 40H-TEMPO | - | 0.02 | 0.02 | 0.02 | 0.02 | 0.02 | 0.02 | 0.02 | 0.02 | 0.02 | 0.02 | 0.02 | 0.02 |
| Solvent (Component D) | Water | - | 30.00 | 30.00 | 30.00 | 30.00 | 30.00 | 30.00 | 11.78 | 13.72 | 16.65 | 16.33 | 17.79 | 19.98 |
| | NMP | - | - | - | - | - | - | - | - | - | - | - | - | - |
| Total | | - | 100 | 100 | 100 | 100 | 100 | 100 | 100 | 100 | 100 | 100 | 100 | 100 |
| Proportion of Component C mol% | | - | 88.1% | 82.5% | 73.0% | 87.7% | 81.8% | 71.3% | 88.3% | 82.8% | 73.5% | 88.3% | 82.8% | 73.4% |

(continued)

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|---|---|
| Proportion of Component A mol% | - | 11.9% | 17.5% | 27.0% | 12.3% | 18.2% | 28.7% | 11.7% | 17.2% | 26.5% | 11.7% | 17.2% | 26.6% |
| CL mass/solid content | - | - | - | - | - | - | - | - | - | - | - | - | - |
| Mass proportion of resin | - | 70.0% | 70.0% | 70.0% | 70.0% | 70.0% | 70.0% | 70.0% | 70.0% | 70.0% | 70.0% | 70.0% | 70.0% |
| Ion exchange capacity meq/g | 1.81 | 3.28 | 3.29 | 3.29 | 3.21 | 3.18 | 3.14 | 3.35 | 3.34 | 3.34 | 3.33 | 3.33 | 3.33 |
| Crosslinking group density mmol/g | 0.35 | 0.35 | 0.49 | 0.70 | 0.35 | 0.49 | 0.70 | 0.35 | 0.49 | 0.70 | 0.35 | 0.49 | 0.70 |

[Table 5]

| | | Comparative Example 14 | Comparative Example 15 | Comparative Example 16 | Comparative Example 17 | Comparative Example 18 | Comparative Example 19 |
|---|---|---|---|---|---|---|---|
| Cationic monomer (Component C) | SM-1 | 46.00 | 42.88 | - | - | - | - |
| | MA-1 75% aqueous solution | - | - | 61.33 | 57.17 | - | - |
| | MA-26 | - | - | - | - | 57.50 | 53.60 |
| Crosslinking agent (Component A) | CL-1 | - | - | - | - | | |
| | CL-8 | - | - | - | - | - | |
| | DVB | 13.28 | 16.40 | 13.28 | 16.40 | 13.28 | 16.40 |
| Polymerization initiator (Component B) | Irgacure 2959 | | | - | | | |
| | Darocur 1173 | 0.70 | 0.70 | 0.70 | 0.70 | 0.70 | 0.70 |
| Polymerization inhibitor | 4OH-TEMPO | 0.02 | 0.02 | 0.02 | 0.02 | 0.02 | 0.02 |
| Solvent (Component D) | Water | 15.00 | 15.00 | - | - | - | |
| | NMP | 25.00 | 25.00 | 24.67 | 25.71 | 28.50 | 29.28 |
| Total | | 100 | 100 | 100 | 100 | 100 | 100 |
| Proportion of Component C mol% | | 68.1% | 61.6% | 68.1% | 61.6% | 68.1% | 61.6% |
| Proportion of Component A mol% | | 31.9% | 38.4% | 31.9% | 38.4% | 31.9% | 38.4% |
| CL mass/solid content | | - | - | - | - | - | - |
| Mass proportion of resin | | 70.0% | 70.0% | 70.0% | 70.0% | 70.0% | 70.0% |
| Ion exchange capacity meq/g | | 2.53 | 2.36 | 2.60 | 2.42 | 2.58 | 2.41 |
| Crosslinking group density mmol/g | | 1.19 | 1.47 | 1.19 | 1.47 | 1.19 | 1.47 |

The unit of the numerical value in the parenthesis of each component of the compositions in Tables 1 to 5 is parts by mass. In addition, the symbol "-" in Tables means that the composition does not contain the component.

$$\text{Proportion of Component C (mol\%)} = \text{content of Component C (mol)}/(\text{content of Component A (mol)} + \text{content of Component C (mol)}) \times 100$$

$$\text{Proportion of Component A (mol\%)} = \text{content of Component A (mol)}/(\text{content of Component A (mol)} + \text{content of Component C (mol)}) \times 100$$

The "CL mass/solid content" in Tables is the content of Compound CL-1 or Compound CL-8 with respect to the solid content in the composition.

In addition, the "resin mass proportion" in Tables indicates a ratio of resin in the anion exchange membrane.

$$\text{Resin proportion} = (\text{dry weight of anion exchange membrane - weight of support}) \div \text{dry weight of anion exchange membrane} \times 100$$

The details of the compounds and the supports used in Examples and Comparative Examples will be described below.

<Component A>

CL-1: Synthesized product, synthesized by the following method
CL-8: Synthesized product, synthesized by the following method

<Component B>

PI-1: manufactured by BASF Japan, Ltd., Product Name: Darocur 1173 (2-hydroxy-2-methyl-1-phenylpropan-1-one)
PI-2: manufactured by BASF Japan, Ltd., Product Name: Irgacure 2959 (1-[4-(2-hydroxyethoxy)-phenyl]-2-hydroxy-2-methyl-1-propane-1-one)

<Component C>

SM-1: Compound shown above, manufactured by Sigma-Aldrich Co. LLC.
MA-1: Compound shown above, Product Name: DMAPAA-Q, manufactured by KJ Chemicals Corporation
MA-26: Compound shown above, Product Name: METHACROYLCHOLINE CHLORIDE, manufactured by Sigma-Aldrich Co. LLC.

<Component D>

Water: Pure water (manufactured by Wako Pure Chemical Industries, Ltd.)
NMP: N-methyl-2-pyrrolidone (manufactured by Wako Pure Chemical Industries, Ltd.)

<Polymerization Inhibitor>

40H-TEMPO: 4-hydroxy-2,2,6,6-tetramethylpiperidine 1-oxyl (POLICE TOP 7300P, manufactured by Hakuto Co., Ltd.)

[Synthesis of CL-1]

1,4-Diazabicyclo[2.2.2]octane (1.00 mol, manufactured by Wako Pure Chemical Industries, Ltd.) was added to a mixed solution of 321 g of chloromethylstyrene (2.10 mol, CMS-P, manufactured by AGC Seimi Chemical Co., Ltd.), 1.30 g of 2,6-di-t-butyl-4-methylphenol (manufactured by Wako Pure Chemical Industries, Ltd.), and 433 g of acetonitrile, and the mixture was heated and stirred for 15 hours at 80°C.
Crystals thus produced were filtered, and 405 g (yield: 97%) of white crystals of an compound (CL-1) were obtained.

[Synthesis of CL-8]

130 g of N,N,N',N'-tetramethyl-1,3-diaminopropane (1.00 mol, manufactured by Tokyo Chemical Industry Co., Ltd.) was added to a mixed solution of 458 g of chloromethylstyrene (3.00 mol, CMS-P, manufactured by AGC Seimi Chemical Co., Ltd.), 1.85 g of 2,6-di-t-butyl-4-methylphenol (manufactured by Wako Pure Chemical Industries, Ltd.), and 1,232 g of nitrobenzene, and the mixture was heated and stirred for 20 hours at 80°C.
Crystals thus produced were filtered, and 218 g (yield: 50%) of white crystals of an compound (CL-8) were obtained.
For the anion exchange membrane produced in Examples 1 to 37 and Comparative Examples 1 to 19, the following items were evaluated.

<Ion Exchange Capacity (meq/g)>

The ion exchange capacity was measured by the following procedures.

1) A sample membrane which had been cut into a size of 5 cm x 5 cm was immersed in a 2 M aqueous $NaNO_3$ solution for 30 minutes and then washed in 500 mL of pure water.
2) The sample membrane was put into 100 mL of a 2 M aqueous NaCl solution. While replacing the 2 M aqueous NaCl solution hourly, the sample membrane was immersed in the solution for 6 hours or longer.
3) The sample membrane was sufficiently washed in 500 mL of pure water while replacing the pure water. It was confirmed that no cloudiness occurred by adding a drop of a 1 M aqueous $AgNO_3$ solution to the cleaning liquid. In the case of cloudiness occurring, cleaning is not sufficient and thus the sample membrane was repeatedly cleaned with pure water.
4) The washed sample membrane was immersed in 30 mL of a 2M aqueous $NaNO_3$ solution, the solution was hourly replaced two times (each 30 mL), and finally the membrane was immersed in the solution for 6 hours or longer.
5) The membrane was taken out and immersed in 30 mL of pure water. The solution was hourly replaced two times (each 30 mL), and finally the membrane was immersed in the solution for 6 hours or longer. It was confirmed that no cloudiness occurred by adding a drop of a 1 M aqueous $AgNO_3$ solution to the final immersion liquid. In the case of cloudiness occurring, cleaning was not sufficient and thus the sample membrane was repeatedly cleaned with pure water.
6) The replaced liquid, the immersion liquid, and the cleaning liquid were mixed and 0.3 g of an aqueous solution of 1/60 mol/L of potassium chromate was further added thereto. Titration with the 0.1 M aqueous $AgNO_3$ solution was conducted such that the time when a reddish brown precipitate was formed was set as an end point. From the titration amount, the amount of ionic groups c (meq) included in the membrane was calculated.
7) The membrane used in the titration was dried in a vacuum oven at 60°C for 12 hours, and then the weight was measured to obtain the dry weight. Further, the ion exchange capacity was calculated from the above value and the value of c using

Equation a: Ion exchange capacity = (amount of ionic groups in membrane meq)/(dry weight of membrane).

<Electrical Resistance ER of Membrane ($\Omega \cdot cm^2$)>

Two surfaces of a membrane that had been immersed in a 0.5 M aqueous $NaNO_3$ solution for about 2 hours were wiped with dry filter paper, and the membrane was inserted into a two-chamber type cell (effective film area: 1

$cm^2$, a Ag/AgCl reference electrode (manufactured by Metrohm AG) was used as an electrode). The two chambers were each filled with 100 mL of an aqueous $NaNO_3$ solution at the same concentration, and the cell was left to stand in a thermostat water bath at 25°C until equilibrium was achieved. After the temperature of the liquid in the cell reached exactly 25°C, the electrical resistance r1 was measured using an alternating current bridge (frequency 1,000 Hz). Next, the membrane was removed, and the electrical resistance r2 between two electrodes was measured using a 0.5 M aqueous $NaNO_3$ solution only. Thus, the electrical resistance of the membrane r was obtained as r1 - r2. This value was used as the electrical resistance ER of the membrane (0.5M $NaNO_3$).

Similar to the electrical resistance ER of the membrane (0.5 M $NaNO_3$), the electrical resistance ER of the membrane (0.5 M $Na_2SO_4$), ER (0.05 M $NaNO_3$), and ER (0.05 M $Na_2SO_4$) were measured. The electrical resistance ER of the membrane was described as "ER" as abbreviation.

An ER ratio (= ER $Na_2SO_4$/ER $NaNO_3$) was calculated to compare permeability of monovalent ions and divalent ions. As this value increases, divalent ions hardly permeate the membrane as compared with monovalent ions and the selectivity is high.

<Electrodialysis Test>

A commercially available cation exchange membrane (CMX, manufactured by Astom Corporation) was combined with the anion exchange membrane of the present invention to prepare a stack and an electrodialyzer (ACILYZER ED, manufactured by Astom Corporation) was used to conduct a desalting test. Three cation exchange membranes and two anion exchange membranes were laminated alternately with spacers provided with a flow passage interposed therebetween to prepare a stack. Aqueous solutions of $NaNO_3$ and $NaSO_4$ were prepared to have a concentration of 0.05 M respectively and the mixed solution was prepared. While allowing the mixed solution to flow through the gaps of the laminate at a flow rate of 1 m/min, a constant current of 5 mA was applied to conduct electrodialysis. The diluted aqueous solution was sampled every 5 minutes, and the concentrations of $NO_3^-$ and $So_4^{2-}$ ions were quantitatively determined by ion chromatography. The anion exchange membranes used in the electrodialysis test were evaluated such that a case in which a ratio of a change in the concentration of $SO_4^{2-}$ ions to a change in the concentration of $NO_3^-$ ions is less than 40% after 30 minutes have passed from the current flowing was evaluated as A, a case in which the rate of a change in the concentration of $SO_4^{2-}$ ions to a change in the concentration of $NO_3^-$ions is 40% or more and less than 70% was evaluated as B, and a case in which the rate of a change in the concentration of $SO_4^{2-}$ ions to a change in the concentration of $NO_3^-$ ions is 70% or more was evaluated as C.

<Scaling Test>

A commercially available cation exchange membrane (CMX, manufactured by Astom Corporation) was combined with the anion exchange membrane of the present invention to prepare a stack and an electrodialyzer (ACILYZER ED, manufactured by Astom Corporation) was used to conduct a desalting test. Three cation exchange membranes and two anion exchange membranes were laminated alternately with spacers provided with a flow passage interposed therebetween to prepare a stack. Aqueous solutions of $NaNO_3$ and $NaSO_4$ were prepared to have a concentration of 0.05 M respectively and aqueous solution of $MgCl_2$, and $CaCl_2$ were prepared to have a concentration of 0.005 M respectively to prepare a mixed solution. While allowing the mixed solution to flow through the gaps of the laminate at a flow rate of 1 m/min, a constant current of 5 mA was applied to conduct electrodialysis. At the stage in which the $NaNO_3$ concentration of the diluted solution was 0.005 M, the mixed solution was discarded and the above-prepared mixed solution was added again to conduct electrodialysis. By repeating this operation, an electrodialysis test was conducted for total 72 hours. After the test was completed, the anion exchange membrane was taken out and sufficiently washed with water. Then, the surface of the anion exchange membrane was observed with a microscope. The anion exchange membranes used in the scaling test were evaluated such that n a case in which a white precipitate is observed on the surface of the anion exchange membrane was evaluated as C, in a case in which a small amount of precipitate is confirmed on the surface of the anion exchange membrane but there is no problem in practical use was evaluated as B, and a case in which no precipitate is observed on the surface of the anion exchange membrane was evaluated as A.

[Table 6]

| | Example 1 | Example 2 | Example 3 | Example 4 | Example 5 | Example 6 | Example 7 | Example 8 | Example 9 | Example 10 |
|---|---|---|---|---|---|---|---|---|---|---|
| ER 0.5 M $NaNO_3$ | 1.34 | 1.65 | 1.92 | 2.10 | 2.25 | 2.44 | 2.80 | 3.21 | 1.32 | 1.62 |
| ER 0.5 M $Na_2SO_4$ | 4.02 | 5.20 | 6.37 | 7.10 | 8.34 | 10.20 | 11.90 | 13.75 | 3.98 | 5.15 |
| 0.5 M ER Ratio ($Na_2SO_4/NaNO_3$) | 3.00 | 3.15 | 3.32 | 3.38 | 3.71 | 4.18 | 4.25 | 4.28 | 3.02 | 3.18 |
| ER 0.05 M $NaNO_3$ | 6.44 | 6.65 | 6.05 | 7.20 | 7.31 | 6.59 | 7.90 | 8.21 | 6.42 | 6.62 |
| ER 0.05 M $Na_2SO_4$ | 9.02 | 10.40 | 9.71 | 12.15 | 13.64 | 13.31 | 16.95 | 18.75 | 8.98 | 10.35 |
| 0.05 M ER Ratio ($Na_2SO_4/NaNO_3$) | 1.40 | 1.56 | 1.61 | 1.69 | 1.87 | 2.02 | 2.15 | 2.28 | 1.40 | 1.56 |
| Electrodialysis Test | B | B | B | B | B | A | A | A | B | B |
| Scaling resistance test | A | A | A | A | A | A | A | A | A | A |

[Table 7]

| | Example 11 | Example 12 | Example 13 | Example 14 | Example 15 | Example 16 | Example 17 | Example 18 | Example 19 | Example 20 |
|---|---|---|---|---|---|---|---|---|---|---|
| ER 0.5 M $NaNO_3$ | 1.87 | 2.08 | 2.22 | 2.41 | 2.71 | 3.15 | 1.55 | 2.01 | 2.50 | 2.83 |
| ER 0.5 M $Na_2SO_4$ | 6.20 | 7.01 | 8.41 | 10.08 | 11.50 | 13.54 | 4.67 | 6.21 | 7.80 | 9.15 |
| 0.5 M ER Ratio ($Na_2SO_4/NaNO_3$) | 3.32 | 3.37 | 3.79 | 4.18 | 4.24 | 4.30 | 3.01 | 3.09 | 3.12 | 3.23 |
| ER 0.05 M $NaNO_3$ | 6.97 | 7.18 | 7.32 | 7.41 | 7.91 | 8.15 | 6.60 | 7.12 | 7.58 | 7.83 |
| ER 0.05M $Na_2SO_4$ | 11.30 | 12.11 | 13.61 | 15.18 | 16.60 | 18.54 | 9.76 | 11.31 | 12.85 | 14.22 |
| 0.05 M ER Ratio ($Na_2SO_4/NaNO_3$) | 1.62 | 1.69 | 1.86 | 2.05 | 2.10 | 2.27 | 1.48 | 1.59 | 1.70 | 1.82 |
| Electrodialysis Test | B | B | B | A | A | A | B | B | B | B |
| Scaling resistance test | A | A | A | A | A | A | A | A | A | A |

[Table 8]

| | Example 21 | Example 22 | Example 23 | Example 24 | Example 25 | Example 26 | Example 27 | Example 28 | Example 29 | Example 30 |
|---|---|---|---|---|---|---|---|---|---|---|
| ER 0.5 M $NaNO_3$ | 3.34 | 3.82 | 4.23 | 1.20 | 1.31 | 1.56 | 1.77 | 2.01 | 2.32 | 2.55 |
| ER 0.5 M $Na_2SO_4$ | 10.85 | 12.53 | 14.90 | 3.80 | 4.55 | 5.50 | 6.43 | 7.21 | 8.56 | 10.10 |
| 0.5 M ER Ratio ($Na_2SO_4$/$NaNO_3$) | 3.25 | 3.28 | 3.52 | 3.17 | 3.47 | 3.53 | 3.63 | 3.59 | 3.69 | 3.96 |
| ER 0.05 M $NaNO_3$ | 8.41 | 8.91 | 9.33 | 6.30 | 6.33 | 6.56 | 6.81 | 7.11 | 7.41 | 7.58 |
| ER 0.05 M $Na_2SO_4$ | 15.94 | 17.53 | 19.90 | 8.90 | 9.57 | 10.50 | 11.47 | 12.31 | 13.65 | 15.13 |
| 0.05 M ER Ratio ($Na_2SO_4NaNO_3$) | 1.90 | 1.97 | 2.13 | 1.41 | 1.51 | 1.60 | 1.68 | 1.73 | 1.84 | 2.00 |
| Electrodialysis Test | B | A | A | B | B | B | B | B | A | A |
| Scaling resistance test | A | A | A | A | A | A | A | A | A | A |

[Table 9]

| | Example 31 | Example 32 | Example 33 | Example 34 | Example 35 | Example 36 | Example 37 |
|---|---|---|---|---|---|---|---|
| ER 0.5 M $NaNO_3$ | 1.16 | 1.25 | 1.65 | 1.88 | 2.15 | 2.41 | 2.62 |
| ER 0.5 M $Na_2SO_4$ | 3.67 | 4.66 | 6.37 | 7.12 | 8.12 | 9.33 | 10.32 |
| 0.5 M ER Ratio ($Na_2SO_4NaNO_3$) | 3.16 | 3.73 | 3.86 | 3.79 | 3.78 | 3.87 | 3.94 |
| ER 0.05 M $NaNO_3$ | 6.26 | 6.35 | 6.65 | 6.90 | 7.23 | 7.50 | 7.66 |
| ER 0.05 M $Na_2SO_4$ | 8.77 | 9.76 | 11.37 | 12.14 | 13.20 | 14.42 | 15.36 |
| 0.05 M ER Ratio ($Na_2SO_4/NaNO_3$) | 1.40 | 1.54 | 1.71 | 1.76 | 1.83 | 1.92 | 2.01 |
| Electrodialysis Test | B | B | B | B | B | A | A |
| Scaling resistance test | A | A | A | A | A | A | A |

[Table 10]

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|
| ER 0.5 M $NaNO_3$ | 4.06 | 0.81 | 1.05 | 1.25 | 1.01 | 1.23 | 1.38 | 0.66 | 0.98 | 1.08 |
| ER 0.5 M $Na_2SO_4$ | 5.55 | 1.21 | 1.81 | 2.55 | 1.45 | 2.10 | 2.88 | 0.99 | 1.33 | 2.11 |
| 0.5 M ER Ratio ($Na_2SO_4$/$NaNO_3$) | 1.37 | 1.49 | 1.72 | 2.04 | 1.44 | 1.71 | 2.09 | 1.50 | 1.36 | 1.95 |
| ER 0.05 M $NaNO_3$ | 9.06 | 5.83 | 6.15 | 6.33 | 6.11 | 6.31 | 6.38 | 5.68 | 6.03 | 6.14 |
| ER 0.05 M $Na_2SO_4$ | 10.55 | 6.24 | 6.91 | 7.64 | 6.55 | 7.19 | 7.88 | 6.07 | 6.43 | 7.20 |
| 0.05 M ER Ratio ($Na_2SO_4$/$NaNO_3$) | 1.16 | 1.07 | 1.12 | 1.21 | 1.07 | 1.14 | 1.24 | 1.07 | 1.07 | 1.17 |
| Electrodialysis Test | C | C | C | C | C | C | C | C | C | C |
| Scaling resistance test | C | C | C | C | C | C | C | C | C | C |

[Table 11]

| | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 |
|---|---|---|---|---|---|---|---|---|---|
| ER 0.5M $NaNO_3$ | 0.71 | 0.95 | 1.11 | 10.21 | 15.33 | 7.71 | 9.11 | 8.12 | 10.10 |
| ER 0.5M $Na_2SO_4$ | 0.95 | 1.29 | 2.23 | 11.54 | 18.10 | 8.54 | 10.53 | 9.12 | 11.32 |
| 0.5 M ER Ratio ($Na_2SO_4/NaNO_3$) | 1.34 | 1.36 | 2.01 | 1.13 | 1.18 | 1.11 | 1.16 | 1.12 | 1.12 |
| ER 0.05M $NaNO_3$ | 5.73 | 6.05 | 6.21 | 15.26 | 20.45 | 12.76 | 14.16 | 13.17 | 15.15 |
| ER 0.05M $Na_2SO_4$ | 6.01 | 6.36 | 7.32 | 16.54 | 23.10 | 13.54 | 15.53 | 14.12 | 16.32 |
| 0.05 M ER Ratio ($Na_2SO_4/NaNO_3$) | 1.05 | 1.05 | 1.18 | 1.08 | 1.13 | 1.06 | 1.10 | 1.07 | 1.08 |
| Electrodialysis Test | C | C | C | C | C | C | C | C | C |
| Scaling resistance test | C | C | C | C | C | C | C | C | C |

As seen from the results shown in Tables 6 to 11, it is found that the anion exchange membranes of Examples 1 to 37 exhibit an electrical resistance ratio of 3 or more in the 0.5 M aqueous solutions and excellent monovalent ion selectivity. In contrast, the anion exchange membranes of Comparative Examples 1 to 19, which do not satisfy the requirements of the present invention, exhibit an electrical resistance ratio of less than 2.1 in the 0.5 M aqueous solutions and low monovalent ion selectivity.

The electrical resistance ratio in a 0.05 M aqueous solution deteriorates proportional to the 0.5M aqueous solution. In the case of a dilute aqueous solution, it is assumed that the resistance of the aqueous solution itself is high and the contribution to the performance of the membrane is hardly reflected. The performance of the anion exchange membranes of Examples is superior to the anion exchange membranes of Comparative Examples even in a dilute aqueous solution. The anion exchange membranes of Comparative Examples have an electrical resistance ratio of almost 1 and hardly have monovalent ion selectivity. In contrast, particularly, the anion exchange membranes of Examples 8, 16, and 23 exhibit an electrical resistance ratio which is two times or more as high as the electrical resistance ratio of the anion exchange membranes of Comparative Examples in the 0.05 M aqueous solutions and excellent performance. The performance difference well matches with the results of the electrodialysis test. In addition, the permeation of $SO_4^{2-}$, which causes scaling, was suppressed and thus the scaling resistance of the anion exchange membrane of Examples was excellent.

Although the principle of obtaining good monovalent ion selectivity in the anion exchange membranes of Examples is not apparent, it is assumed that due to the molecular sieve effect by forming a dense membrane having a high crosslinking group density, the permeation of $SO_4^{2-}$ ions having a radius larger than that of $NO_3^-$ ions is suppressed. In addition, it is assumed that due to a high ion exchange capacity, that is, a high charge density in the membrane, the number of interaction points with divalent $SO_4^{2-}$ ions increase and thus the permeation of the entering $SO_4^{2-}$ ions is relatively suppressed.

## Claims

**1.** A functional polymer membrane for removing nitrate ions comprising:

an ion exchange polymer containing a constitutional unit represented by Formula CL as Constitutional unit A, wherein an ion exchange capacity represented by Equation a is 2.5 meq/g or more and 6.0 meq/g or less, a crosslinking group density represented by Equation b is 0.9 mmol/g or more and 2.0 mmol/g or less,

Equation a: Ion exchange capacity = (amount of ionic groups in membrane meq)/(dry weight of membrane)

Equation b: Crosslinking group density = (amount of Component A in membrane mmol)/(dry weight of membrane)

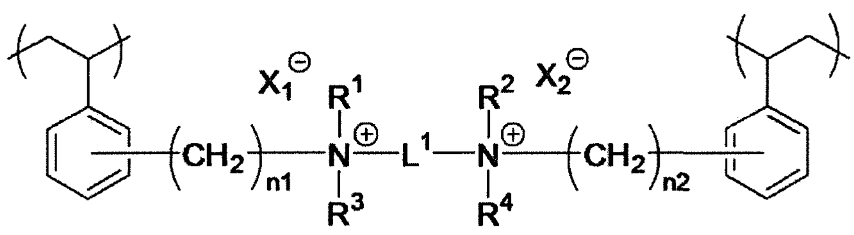

**(CL)**

in Formula CL, $L^1$ represents an alkylene group or an alkenylene group, $R^1$, $R^2$, $R^3$ and $R^4$ each independently represent an alkyl group or an aryl group, $R^1$ and $R^2$, and/or $R^3$ and $R^4$ may be bonded to each other to form a ring, n1 and n2 each independently represent an integer of 1 to 10, and $X_1^-$ and $X_2^-$ each independently represent an organic or inorganic anion.

**2.** The functional polymer membrane for removing nitrate ions according to claim 1, wherein the ion exchange polymer further contains a constitutional unit represented by Formula SM or Formula MA as Constitutional unit C,

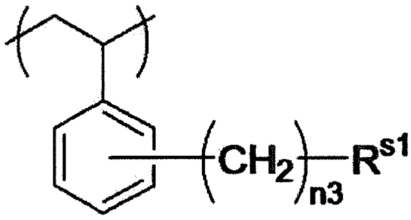

**(SM)**

in Formula SM, $R^{s1}$ represents $-N^+(R^{s2})(R^{s3})(R^{s4})(X_3^-)$, n3 represents an integer of 1 to 10, $R^{s2}$ to $R^{s4}$ each independently represent an alkyl group or an aryl group, $R^{s2}$ and $R^{s3}$, or $R^{s2}$, $R^{s3}$ and $R^{s4}$ may be bonded to each other to form an aliphatic hetero ring, and $X_3^-$ represents an organic or inorganic anion,

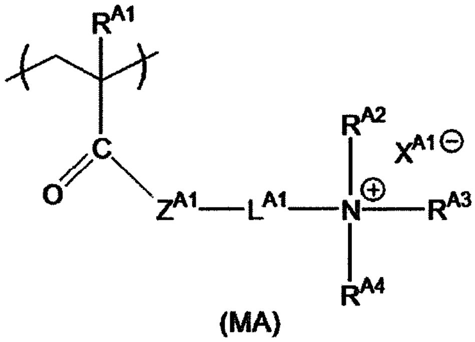

**(MA)**

in Formula MA, $R^{A1}$ represents a hydrogen atom or an alkyl group, $R^{A2}$ to $R^{A4}$ each independently represent an alkyl group or an aryl group, two or more of $R^{A2}$ to $R^{A4}$ may be bonded to each other to form a ring, $Z^{A1}$ represents -O- or -N(Ra)-, Ra represents a hydrogen atom or an alkyl group, $L^{A1}$ represents an alkylene group, and $X^{A1}$ represents a halogen ion, an aliphatic carboxylate ion, an aromatic carboxylate ion, an aliphatic sulfonate ion, or an aromatic sulfonate ion.

**3.** The functional polymer membrane for removing nitrate ions according to claim 1 or 2,

wherein the ion exchange polymer is obtained by polymerizing a composition that contains a compound represented by Formula CL2 as Component A, and a photopolymerization initiator represented by Formula PI as Component B,

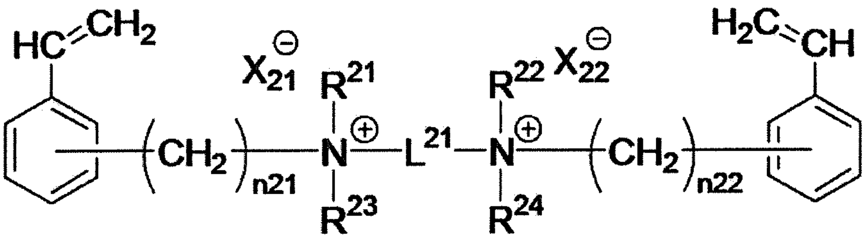

**(CL2)**

in Formula CL2, $L^{21}$ represents an alkylene group or an alkenylene group, $R^{21}$, $R^{22}$, $R^{23}$ and $R^{24}$ each independently represent an alkyl group or an aryl group, $R^{21}$ and $R^{22}$, and/or $R^{23}$ and $R^{24}$ may be bonded to each other to form a ring, n21 and n22 each independently represent an integer of 1 to 10, and $X_{21}^-$ and $X_{22}^-$ each

independently represent an organic or inorganic anion,

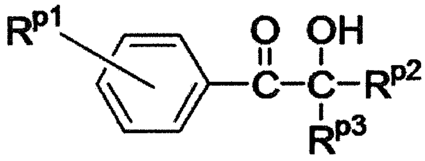

(PI)

in Formula PI, $R^{p1}$ represents a hydrogen atom, an alkyl group, an alkenyl group, alkoxy group or an aryloxy group, $R^{p2}$ and $R^{p3}$ each independently represent a hydrogen atom, an alkyl group, an alkenyl group, an alkoxy group or an aryloxy group, and $R^{p2}$ and $R^{p3}$ may be bonded to each other to form a ring.

**4.** The functional polymer membrane for removing nitrate ions according to claim 3,

wherein a content of Component A is 55% to 99% by mass with respect to a total solid content of the composition.

**5.** The functional polymer membrane for removing nitrate ions according to claim 3 or 4,

wherein a content of Component B is 0.1% to 10% by mass with respect to a total solid content of the composition.

**6.** The functional polymer membrane for removing nitrate ions according to any one of claims 3 to 5,

wherein the composition further includes a compound represented by Formula SM2 or a compound represented by Formula MA2 as Component C, and
a molar ratio between Component A and Component C in the composition is Component A: Component C = 60:40 to 100:0,

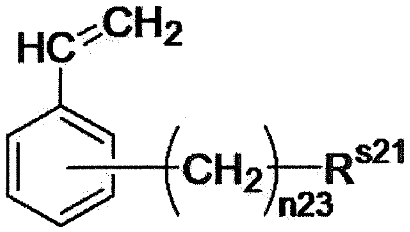

(SM2)

in Formula SM2, $R^{s21}$ represents $-N^+(R^{s22})(R^{s23})(R^{s24})(X_{23}^-)$, n23 represents an integer of 1 to 10, $R^{s22}$ to $R^{s24}$ each independently represent an alkyl group or an aryl group, $R^{s22}$ and $R^{s23}$, or $R^{s22}$, $R^{s23}$ and $R^{s24}$ may be bonded to each other to form an aliphatic hetero ring, and $X_{23}^-$ represents an organic or inorganic anion,

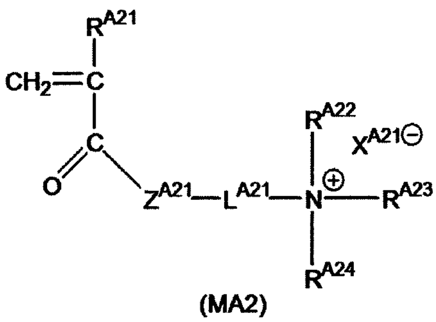

(MA2)

in Formula MA2, $R^{A21}$ represents a hydrogen atom or an alkyl group, $R^{A22}$ to $R^{A24}$ each independently represent

an alkyl group or an aryl group, two or more of $R^{A22}$ to $R^{A4}$ may be bonded to each other to form a ring, $Z^{A21}$ represents -O- or -N(Ra)-, Ra represents a hydrogen atom or an alkyl group, $L^{A21}$ represents an alkylene group, and $X^{A21}$ represents a halogen ion, an aliphatic carboxylate ion, an aromatic carboxylate ion, an aliphatic sulfonate ion, or an aromatic sulfonate ion.

**7.** The functional polymer membrane for removing nitrate ions according to any one of claims 3 to 6,

wherein the composition further includes a solvent as Component D.

**8.** The functional polymer membrane for removing nitrate ions according to claim 7,

wherein the composition includes water or a water-soluble solvent as Component D.

**9.** The functional polymer membrane for removing nitrate ions according to any one of claims 1 to 8, further comprising: a support.

**10.** The functional polymer membrane for removing nitrate ions according to claim 9,

wherein the support is a porous support.

**11.** The functional polymer membrane for removing nitrate ions according to any one of claims 1 to 10, wherein the ion exchange polymer is obtained by polymerizing the composition that contains a compound represented by Formula CL2 as Component A, and
a molecular weight of Component A is 300 or more and 600 or less,

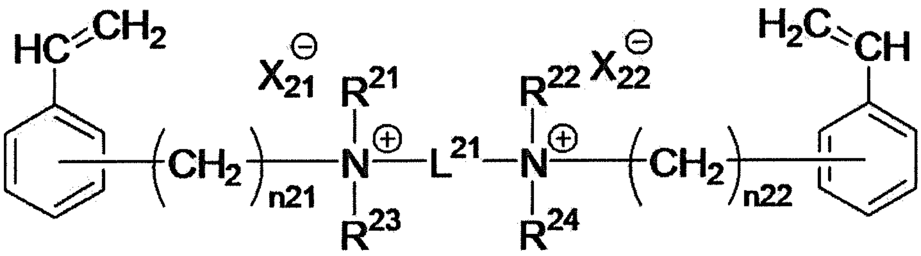

(CL2)

in Formula CL2, $L^{21}$ represents an alkylene group or an alkenylene group, $R^{21}$, $R^{22}$, $R^{23}$ and $R^{24}$ each independently represent an alkyl group or an aryl group, $R^{21}$ and $R^{22}$, and/or $R^{23}$ and $R^{24}$ may be bonded to each other to form a ring, n21 and n22 each independently represent an integer of 1 to 10, and $X_{21}^-$ and $X_{22}^-$ each independently represent an organic or inorganic anion.

**12.** A method of producing a functional polymer membrane for removing nitrate ions comprising:

polymerizing a composition that contains a compound represented by Formula CL2 as Component A to cure the composition,
wherein the functional polymer membrane has an ion exchange capacity represented by Equation a of 2.5 meq/g or more and 6.0 meq/g or less, and a crosslinking group density represented by Equation b of 0.9 mmol/g or more and 2.0 mmol/g,

Equation a: Ion exchange capacity = (amount of ionic groups in membrane meq)/(dry weight of membrane)

Equation b: Crosslinking group density = (amount of Component A in membrane mmol)/(dry weight of membrane)

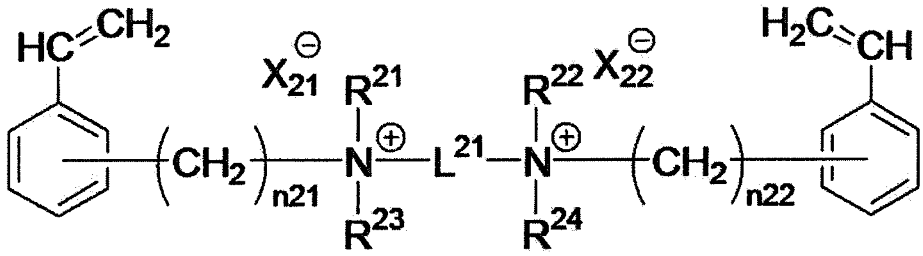

(CL2)

in Formula CL2, $L^{21}$ represents an alkylene group or an alkenylene group, $R^{21}$, $R^{22}$, $R^{23}$ and $R^{24}$ each independently represent an alkyl group or an aryl group, $R^{21}$ and $R^{22}$, and/or $R^{23}$ and $R^{24}$ may be bonded to each other to form a ring, n21 and n22 each independently represent an integer of 1 to 10, and $X_{21}^-$ and $X_{22}^-$ each independently represent an organic or inorganic anion.

**13.** The method of producing a functional polymer membrane for removing nitrate ions according to claim 12, wherein the composition further includes a photopolymerization initiator represented by Formula PI as Component B,

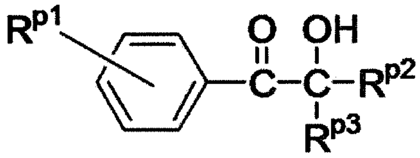

(PI)

in Formula PI, $R^{p1}$ represents a hydrogen atom, an alkyl group, an alkenyl group, an alkoxy group or an aryloxy group, $R^{p2}$ and $R^{p3}$ each independently represent a hydrogen atom, an alkyl group, an alkenyl group, an alkoxy group or an aryloxy group, and $R^{p2}$ and $R^{p3}$ may be bonded to each other to form a ring.

**14.** The method of producing a functional polymer membrane for removing nitrate ions according to claim 12 or 13, wherein the composition further includes a compound represented by Formula SM2 or a compound represented by Formula MA2 as Component C,

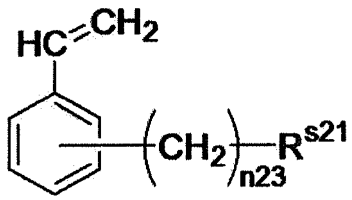

(SM2)

in Formula SM2, $R^{s21}$ represents $-N^+(R^{s22})(R^{s23})(R^{s24})(X_{23}^-)$, n23 represents an integer of 1 to 10, $R^{s22}$ to $R^{s24}$ each independently represent an alkyl group or an aryl group, $R^{s22}$ and $R^{s23}$, or $R^{s22}$, $R^{s23}$ and $R^{s24}$ may be bonded to each other to form an aliphatic hetero ring, and $X_{23}^-$ represents an organic or inorganic anion,

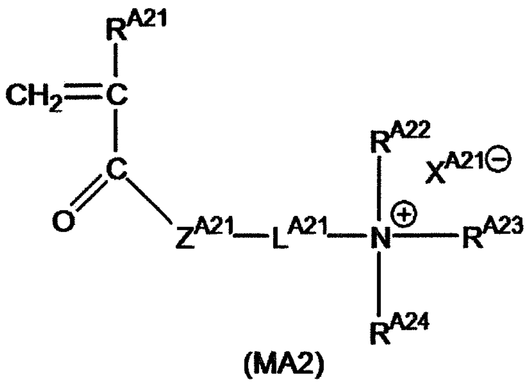

(MA2)

in Formula MA2, $R^{A21}$ represents a hydrogen atom or an alkyl group, $R^{A22}$ to $R^{A24}$ each independently represent an alkyl group or an aryl group, two or more of $R^{A22}$ to $R^{A4}$ may be bonded to each other to form a ring, $Z^{A21}$ represents -O- or -N(Ra)-, Ra represents a hydrogen atom or an alkyl group, $L^{A21}$ represents an alkylene group, and $X^{A21}$ represents a halogen ion, an aliphatic carboxylate ion, an aromatic carboxylate ion, an aliphatic sulfonate ion, or an aromatic sulfonate ion.

**15.** The method of producing a functional polymer membrane for removing nitrate ions according to any one of claims 12 to 14,
wherein the composition further includes water as Component D.

**16.** The method of producing a functional polymer membrane for removing nitrate ions according to any one of claims 12 to 15,
wherein the composition further includes a polymerization inhibitor as Component E.

**17.** The method of producing a functional polymer membrane for removing nitrate ions according to any one of claims 12 to 16, further comprising:

applying the composition to a porous support and/or impregnating a porous support with the composition.

**18.** The method of producing a functional polymer membrane for removing nitrate ions according to any one of claims 12 to 17,
wherein the polymerizing is a process of irradiating the composition with energy rays.

**19.** A separation membrane module comprising:

the functional polymer membrane for removing nitrate ions according to any one of claims 1 to 11.

**20.** An ion exchange device comprising:

the functional polymer membrane for removing nitrate ions according to any one of claims 1 to 11.

**INTERNATIONAL SEARCH REPORT**

International application No.
PCT/JP2015/070156

A. CLASSIFICATION OF SUBJECT MATTER
*B01J41/14*(2006.01)i, *B01D61/46*(2006.01)i, *B01D69/02*(2006.01)i, *B01D69/10*(2006.01)i, *B01D69/12*(2006.01)i, *B01J47/12*(2006.01)i, *C08J5/22*(2006.01)i

According to International Patent Classification (IPC) or to both national classification and IPC

B. FIELDS SEARCHED

Minimum documentation searched (classification system followed by classification symbols)
B01J41/14, B01D61/46, B01D69/02, B01D69/10, B01D69/12, B01J47/12, C08J5/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 61-185507 A (Tokuyama Soda Co., Ltd.), 19 August 1986 (19.08.1986), claims; page 2, lower right column, line 7 to page 5, lower right column, line 8 (Family: none) | 1-20 |
| Y | JP 6-172559 A (Asahi Glass Co., Ltd.), 21 June 1994 (21.06.1994), claims; paragraphs [0033] to [0044] (Family: none) | 1-20 |
| Y | JP 7-171574 A (Asahi Glass Co., Ltd.), 11 July 1995 (11.07.1995), claims; paragraphs [0001] to [0010] (Family: none) | 1-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 August 2015 (13.08.15) | 25 August 2015 (25.08.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

INTERNATIONAL SEARCH REPORT

International application No.
PCT/JP2015/070156

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-2738 A (Mitsubishi Chemical Corp.), 09 January 2001 (09.01.2001), claims; paragraphs [0010] to [0032] (Family: none) | 2 |
| Y | WO 2010/110333 A1 (Kuraray Co., Ltd.), 30 September 2010 (30.09.2010), claims; paragraphs [0009] to [0018] & JP 5715558 B & US 2012/0035280 A1 & US 2014/0200280 A1 & EP 2412752 A1 & CN 102449042 A & TW 201036693 A & KR 10-2012-0002595 A | 2 |
| Y | WO 2014/050993 A1 (Fujifilm Corp.), 03 April 2014 (03.04.2014), claims; paragraphs [0070] to [0122] & JP 2014-69155 A & JP 2014-69156 A & WO 2014/050992 A1 & CN 104703682 A & CN 104684634 A | 3-10,13, 15-18 |
| Y | JP 2014-505762 A (General Electric Co.), 06 March 2014 (06.03.2014), claims; paragraphs [0009] to [0022] & US 2012/0165419 A1 & WO 2012/087770 A1 & EP 2655490 A & TW 201231524 A & AR 84552 A & CA 2821336 A & CN 103261289 A & SG 191256 A & KR 10-2014-0016883 A | 6,14 |
| A | WO 2013/155608 A1 (SALTWORKS TECHNOLOGIES INC.), 24 October 2013 (24.10.2013), claims; page 4, line 18 to page 11, line 3 & US 2015/0044366 A1 & CA 2866300 A & CA 2863060 A | 1-20 |
| P,A | JP 2014-208335 A (Fujifilm Corp.), 06 November 2014 (06.11.2014), claims; paragraphs [0008] to [0121] & WO 2014/157195 A1 | 1-20 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7265863 A
- JP H07265863 A
- JP 2001049009 A
- JP 2000229917 A
- JP 2000212306 A
- JP 2008208190 A
- JP 2008266561 A

### Non-patent literature cited in the description

- *Membrane Science,* 2008, vol. 319, 217-218
- **MASAYUKI NAKAGAKI.** *Experimental method in membrane science,* 1984, 193-195
- Fifth Edition Experimental Science Course 26-Polymer Chemistry. The Chemical Society of Japan. Maruzen Co., Ltd,